# EUROPÄISCHE PATENTSCHRIFT

(11) **EP 2 944 737 B1**
(45) Veröffentlichungstag und Bekanntmachung des Hinweises auf die Patenterteilung: **30.11.2016**
(21) Anmeldenummer: 15167196.3
(22) Anmeldetag: 11.05.2015
(51) Int. Cl.: E04B 9/16, F16B 2/06, F16B 7/04

(54) **SPANNVORRICHTUNG ZUM VERBINDEN VON PROFILSCHIENEN**
CLAMPING DEVICE FOR CONNECTING SECTION BARS
DISPOSITIF DE SERRAGE DESTINÉ À RELIER DES ÉLÉMENTS PROFILÉS

(30) Priorität: 12.05.2014 DE 102014106656
(43) Veröffentlichungstag der Anmeldung: 18.11.2015
(73) Patentinhaber: Salzgitter Mannesmann Stahlhandel GmbH, 40476 Düsseldorf (DE)
(72) Erfinder: Meister, Steffen, 30900 Wedemark (DE)
(74) Vertreter: Stoffregen, Hans-Herbert

(56) Entgegenhaltungen:
- KR-A- 20040 062 126
- US-A1- 2005 139 743

## Beschreibung

Die Erfindung bezieht sich auf eine Spannvorrichtung zum Verbinden eines ersten Profils, wie Vierkant-Profils, mit einem vorzugsweise von einer Decke abhängenden quer zu dem ersten Profil verlaufenden zweiten Profil, wie T-Profil, umfassend eine Spannklammer mit zwei aufeinanderzu verstellbaren Schenkeln mit jeweils einer Aussparung zur Aufnahme und Fixierung des ersten Profils und jeweils einem Endabschnitt zur Fixierung an einem Abschnitt des zweiten Profils sowie ein Schraubelement zum Aufeinanderzubewegen der Schenkel, wobei die Spannvorrichtung ein mit den Schenkeln der Spannklammer zusammenwirkendes Schließblech mit Anschlägen aufweist, das Schraubelement von einem die Schenkel verbindenden Abschnitt ausgeht und zum Verstellen der Schenkel relativ zu dem Schließblech gegen das erste Profil abstützbar ist, und wobei von den Schenkeln ausgehende Abschnitte mit den Anschlägen zusammenwirken und beim Verstellen der Spannklammer das Aufeinanderzuschwenken der Schenkel zum formschlüssigen Verbinden der Endabschnitte mit dem Abschnitt des zweiten Profils bewirken wobei die Spannvorrichtung ein mit den Schenkeln der Spannklammer zusammenwirkendes Schließblech mit Anschlägen aufweist, das Schraubelement von einem die Schenkel verbindenden Abschnitt ausgeht und zum Verstellen der Schenkel relativ zu dem Schließblech gegen das erste Profil abstützbar ist, und wobei von den Schenkeln ausgehende Abschnitte mit den Anschlägen zusammenwirken und beim Verstellen der Spannklammer das Aufeinanderzuschwenken der Schenkel zum formschlüssigen Verbinden der Endabschnitte mit dem Abschnitt des zweiten Profils bewirken.

Eine Spannvorrichtung wird in dem Prospekt "4.0 Flexschlauch/Halterung", Stand: 1/08; der Firma Salzgitter Mannesmann Stahlhandel GmbH in Abschnitt 4.3 "VIROTEC-Halterung VX-SH" beschrieben. Mit der Spannvorrichtung wird ein erstes Profil in Form eines Vierkant-Profils als Querstange auf einer von einer Decke abhängenden quer zu dem ersten Profil verlaufenden T-förmigen Profilschiene einer Rasterdecke befestigt. Die Querstange dient zur Aufnahme einer Halterung zur Ausrichtung und Befestigung eines Flex-Schlauchs eines Sprinklers z. B. im Zentrum einer Deckenplatte innerhalb eines Deckenrasters.

Die Spannvorrichtung umfasst eine Halterung mit zwei aufeinanderzu verstellbaren Schenkeln. In jedem der Schenkel ist eine rechteckförmige Aussparung eingebracht, so dass die Spannvorrichtung auf das Vierkant-Profil aufgeschoben werden kann. Die Schenkel werden mittels eines Schraubelements, welches die beiden Schenkel durchsetzt und in Längsrichtung des ersten Profils verläuft, aufeinanderzu bewegt, so dass die Spannvorrichtung an einem deckenseitigen Abschnitt des zweiten Profils durch die Enden der Schenkel fixiert und das Vierkant-Profil in den Aussparungen der Schenkel geklemmt wird.

Bei der bekannten Ausführungsform der Spannvorrichtung verläuft das Schraubelement in Längsrichtung und unterhalb des ersten Profils, so dass die Zugänglichkeit und Montage des Schraubelementes durch das erste Profil beeinträchtigt ist, da z. B. ein Imbusschlüssel nicht frei um 360° gedreht werden kann.

Des Weiteren kann der Abschnitt des zweiten Profils, an dem die Spannvorrichtung fixiert werden soll, herstellerbedingt unterschiedliche Abmessungen aufweisen. Eine sichere Fixierung der bekannten Spannvorrichtung an unterschiedliche Ausführungen von Profilschienen ist bei der bekannten Spannvorrichtung nicht gewährleistet.

Die DE 92 01 081 U1 betrifft eine Rasterdecke für Reinräume, die winklig zueinander angeordnete Tragschienen aufweist, die Rasterdeckenöffnungen bilden, in deren Bereich Filterelemente angeordnet sind. Die Rasterdecke hat Tragschienen, die durch Kupplungsstücke miteinander verbunden sind. Die im Eckbereich der Rasterdecke befindlichen Kupplungsstücke haben zwei winklig zueinander liegende Anschlussarme für die Tragschienen. Im Bereich der Ränder der Rasterdecke sind die Kupplungsstücke mit drei Anschlussarmen und innerhalb der Rasterdecke mit vier Anschlussarmen versehen. Die Tragschienen und die Kupplungsstücke können in bekannter Weise ausgebildet und miteinander verbunden sein, vorzugsweise durch Schraubverbindungen. Die DE 60 2005 002 410 T2 betrifft eine Rasterdecke in Trockenbauweise mit Wandprofil zum Stützen der Deckenträger. Das Wandprofil hat ein Paar von ausgeformten, haltenden Klammern, die in regelmäßigem Abstand längs des Profils angeordnet sind und aus der horizontalen Leiste des Profils geschnitten werden, während das Profil Walz-, Gesenk- oder auf andere Weise profiliert wird. Das Paar von Klammer arbeitet zusammen mit einem einzigen Sperrzahn an der Leiste bei einer Ausführungsform oder mit zwei Sperrzähnen bei einer anderen Ausführungsform, um die Trägerflansche an der Leiste durch eine einzige Rückwärts- und Vorwärtsbewegung zu positionieren und zu arretieren. Die Flansche werden durch die Klammern, die nach unten federvorgespannt sind, nach unten auf der Leiste gehalten.

In der DE 2 151 701 B ist eine Vorrichtung zum Herstellen von Wandelementen aus Beton beschrieben, in die zum Verbinden benachbarter Wandelemente ein sie umgebender, aus einem C-förmigen und nach außen offenen Profil bestehender Rahmen einbetoniert ist. Die Vorrichtung weist Formwände auf, deren Breite der Dicke der herzustellenden Wandelemente entspricht und an denen der Rahmen in einer vorbestimmten Lage fixierbar ist. Die Formwände weisen Aussparungen auf, durch die jeweils eine im Querschnitt U-förmige, an den freien Enden ihrer beiden Schenkel in etwa senkrecht zu den Schenkeln angeordnete Lasche aufweisende Spannklammer in dem offenen Rahmen quer hineinragt und mit ihren Laschen und die beiden einander zugewandten Umbiegungen des im Querschnitt C-förmigen Profils, aus dem der Rahmen besteht, hintergreift. Ferner ist vorgesehen, dass zwischen den Steg jeder Stangenklammer und die zu gehörige Formwand zum Anpressen der Formwand an den Rahmen ein länglicher Körper einsteckbar ist.

Der KR 2004 0062126 A ist eine Spannvorrichtung gemäß dem Oberbegriff des Anspruchs 1 entnehmen, die zueinander
verstellbare Schenkel aufweist, aus denen nach innen abragende federartige Zungen ausgeschnitten sind, die zum Aufeinanderzubewegen in den Schlitz eines Vierkantprofils eindringbar sind, wobei das Vierkantprofil sodann zu den Zungenwurzeln verstellt werden muss.

Aus der US 2005/0139743 A1 ist eine Spannklammer bekannt, deren Schenkel in den Schlitz eines U-Profils eingeschoben werden, um ein Auseinanderbiegen der Schenkel zu verhindern.

Der vorliegenden Erfindung liegt die Aufgabe zu Grunde, eine Spannvorrichtung der eingangs genannten Art so weiterzubilden, dass diese bei verbesserter Fixierung der Profile ein einfaches Handling aufweist.

Die Aufgabe wird erfindungsgemäß dadurch gelöst, dass die von den Schenkeln ausgehenden Abschnitte vorspringende Abschnitte sind und in Bezug auf den Abschnitt des zweiten Profils außenseitig an den Schenkeln vorgesehen sind und als Abkantungen in Form einer Lasche oder als Prägung in Form einer Materialaufwölbung ausgebildet sind.

Die erfindungsgemäße Ausführungsform zeichnet sich gegenüber dem Stand der Technik dadurch aus, dass durch Betätigung des Schraubelementes eine Relativbewegung zwischen Spannklammer und Schließblech bewirkt wird, wodurch Endabschnitte der Schenkel gegen den Abschnitt des zweiten Profils fixiert werden. Die Relativbewegung zwischen Spannklammer und Schließblech erfolgt auch noch im geschlossenen Zustand der Schenkel, wodurch entsprechend der Schraubenposition eine Anpassung an unterschiedliche Ausführungen des Abschnitts des zweiten Profils, insbesondere eine Anpassung an die Höhe des Abschnitts des zweiten Profils erreicht und somit immer eine exakte formschlüssige Verbindung sichergestellt ist.

Da das Schraubelement in einem die Schenkel verbindenden Abschnitt der Spannklammer aufgenommen ist, verläuft dieses senkrecht zu einer von dem ersten und zweiten Profil aufgespannten Ebene bzw. quer zu einer Längserstreckung des ersten Profils, mit der Folge, dass das Schraubelement bei der Montage deckenseitig frei zugänglich und handhabbar ist. Bei der Ausführungsform kann ein Schraubwerkzeug wie beispielsweise ein Imbusschlüssel bei Deckenmontage z. B. deckenseitig von oben aufgesetzt und frei um 360 ° rotieren werden.

Gemäß einer bevorzugten Ausführungsform ist vorgesehen, dass das Schraubelement als Gewindestift in einem in dem Abschnitt eingebrachten Gewinde oder einer von dem Abschnitt ausgehenden Mutter aufgenommen ist. Dabei verläuft das Schraubelement senkrecht zu einer von dem Schließblech aufgespannten Ebene, wobei ein deckenseitiges Ende als Werkzeugaufnahme ausgebildet und frei zugänglich ist und wobei ein profilseitiges Ende gegen das erste Profil abstützbar ist. Die Abschnitte der Schenkel sind auch in geschlossenem Zustand stufenlos entlang der Anschläge der Schließklammer bewegbar, so dass die Spannklammer solange verstellt werden kann, bis die abgewinkelten Endabschnitte der Schenkel an einem unteren Rand des Abschnitts des zweiten Profils zur Anlage gelangen.

In bevorzugter Ausführungsform ist die Spannklammer als ein U-förmiges Blechformteil ausgebildet.

Die Materialaufwölbungen als Alternative zu den Laschen verbessern Funktion und Stabilität der Spannvorrichtung, da die Auswölbungen einerseits eine Versteifung der Schenkel bis in den Endabschnitt und andererseits eine größere Auflagefläche an den Anschlägen des Schließbleches beim Schließen der Spannvorrichtung bewirken. Zudem wird die seitliche Führung des Schließbleches verbessert, da im Innenbereich keine Vertiefungen gebildet werden.

Die Abkantungen können an einem Innenrand der rechteckförmigen Aussparung oder an einem Außenrand des jeweiligen Schenkels angeformt sein.

Vorzugsweise verlaufen die Abkantungen in Ebenen, die rechtwinklig zu einer von dem Schenkel aufgespannten Ebene verlaufen.

Die vorspringenden Prägungen können in seitlichen Randabschnitten bzw. Armen des jeweiligen Schenkels ausgebildet sein, um eine Versteifung der Arme bis in den Endabschnitt sowie eine größere Auflagefläche zu bilden.

Gemäß einer ersten Ausführungsform weist das Schließblech zwei randseitig gegenüberliegende vorzugsweise rechteckförmige Aussparungen auf, wobei einander gegenüberliegende parallele Randabschnitte einer Aussparung jeweils einen der Anschläge für die von dem Schenkel vorspringenden Abschnitte bilden und einen Abstand zueinander aufweisen, der einem Abstand des ersten Schenkels von dem zweiten Schenkel entspricht.

In bevorzugter Ausführungsform ist das Schließblech als ein ebenes Blech ausgebildet und bildet eine erste Abstützung, die gegen die Unterseite des ersten Profils und eine zweite Abstützung, die gegen eine Oberseite des Abschnitts des zweiten Profils anliegt.

Zur Versteifung des Schließbleches kann vorgesehen sein, dass randseitig Versteifungen wie Abkantungen vorgesehen sind.

Um das erste Profil mit Abstand zu dem zweiten Profil anzuordnen, ist gemäß einer bevorzugten Ausführungsform vorgesehen, dass das Schließblech vorzugsweise U-förmig ausgebildet ist und seitliche Schenkel aufweist, wobei Endabschnitte der Schenkel die erste Abstützung und eine Unterseite des die Schenkel verbindenden Abschnitts die zweite Abstützung bilden.

Gemäß einer alternativen Ausführungsform ist vorgesehen, dass das Schließblech eine von den Schenkeln der Spannklammer durchsetzten Innenrahmen aufweist, wobei der Innenrahmen einen Querschnitt aufweist, der an einen Querschnitt der Spannklammer angepasst ist, wobei der Innenrahmen die Anschläge für die von den Schenkeln vorspringenden Abschnitte bildet.

In bevorzugter Ausführungsform ist vorgesehen, dass die Spannvorrichtung als vormontierte Einheit zusammengesetzt ist. Dabei kann entweder das Schließblech in den Aussparungen der Schenkel oder die Schenkel in dem Innenrahmen des Schließblechs aufgenommen sein. Zur Fixierung des Schließblechs an der Spannklammer ist vorgesehen, dass zumindest zwei vorzugsweise jedem der vorspringenden Abschnitte eines Schenkels knopfförmige Vorsprünge derart zugeordnet sind, dass das Schließblech zwischen einem vorzugsweise rampenförmigen Rand eines der vorspringenden Abschnitte der Schenkel und dem zumindest einen knopfförmigen Vorsprung in vormontiertem Zustand fixiert ist.

Durch das vormontierte Schließblech wird der Vorteil erreicht, dass das erste Profil, mit in Längsrichtung aufgesteckten Spannvorrichtungen, auf das zweite Profil, d. h. die T-Profilschiene, sicher aufgesetzt werden kann. Dabei bildet das Schließblech durch die unterseitige Abstützung in Verbindung mit der Fixierung eine Auflage, so dass die vormontierte Einheit selbstständig stehen bleibt, auch bevor der Gewindestift angezogen wurde.

Gemäß einer weiteren bevorzugten Ausführungsform ist vorgesehen, dass die Schenkel in einem Übergangsbereich zu dem das Schraubelement aufnehmenden Abschnitt oder in einen mittleren Bereich entlang einer Biegelinie eine Materialschwächung wie Durchbrechung in Form von Löchern oder Ausklinkungen aufweisen. Durch die gezielte Materialschwächung im oberen und/oder mittleren Bereich der Schenkel wird die Biegespannung reduziert, so dass beim Schließen der Klammer weniger Kraft aufgewendet werden muss. Dadurch wird eine elastische und geringe plastische Verformung erreicht, wodurch ein seitliches Verziehen der Spannklammer beim Schließen verhindert wird. Schließlich wird eine gezielte Verformung bzw. Biegung im oberen und/oder mittleren Bereich entlang der definierten Biegelinie unter Einhaltung eines gewünschten Biegewinkels ermöglicht.

Des Weiteren ist vorgesehen, dass die Schenkel der Spannklammer insbesondere in ihrem Endabschnitt, vorzugsweise längliche nach außen geprägte Ausformungen zur Versteifung der Schenkel gegen Verbiegen aufweisen.

Vorzugsweise sind beide Schenkel im mittleren Bereich bereits vor Montage in einem Winkel α nach außen gebogen, so dass die Endabschnitte nach dem Schließen parallel verlaufen, ohne dass eine Verformung im mittleren Bereich erfolgt. Daraus resultiert, dass im mittleren Bereich keine Biegespannung (Verformung) auftritt, so dass der Kraftaufwand beim Schließen der Klammer reduziert ist. Aus Obigem ergibt sich eine Reduzierung der gesamten Montagekräfte. Ferner wird ein seitliches Verziehen der Spannklammer verhindert.

Gemäß einer Weiterentwicklung zeichnen sich die erfindungsgemäßen Schließbleche dadurch aus, dass diese von einer Grundplatte abgewinkelte Schenkel aufweisen, deren Länge etwa der Höhe des ersten Profils entspricht, wobei Innenflächen der Schenkel im montierten Zustand an Außenflächen des Profils anliegen, um eine Führung des Schließbleches gegenüber den Schenkeln der Spannklammer zu bilden. Ferner wird ein seitliches Wegkippen des Schließbleches durch Abstützung gegen das erste Profil verhindert.

Des Weiteren ist vorgesehen, dass das Schließblech ausgehend von der Grundplatte zwei weitere Schenkel aufweist, die entlang eines Längsrandes der Grundplatte abgewinkelt sind und eine Abstützung der Schenkel der Spannklammer nach innen bilden sowie ein Einfallen der Schenkel nach innen verhindern.

Eine alternative Ausführungsform eines erfindungsgemäßen Schließbleches zeichnet sich dadurch aus, dass ausgehend von der Grundplatte zwei kurze abgewinkelte Schenkel entlang einer Mittelachse nach unten abgewinkelt sind, wobei die beiden innenliegenden Schenkel eine prismatische Zentrierung bilden. Dadurch wird eine Positionierung, d. h., seitliche Ausrichtung der Spannklammer auf der Profilschiene und zusätzlich eine Verriegelung der Spannklammer im Endabschnitt erreicht, nachdem die Spannvorrichtung geschlossen ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung der den Figuren zu entnehmenden bevorzugten Ausführungsbeispielen.

Der Schutzumfang ist nur durch die angehängten Patentansprüche definiert. Es zeigen:
- Fig. 1a) - 1c): eine Vorder-, Seiten- und Draufsicht einer ersten Ausführungsform einer Spannvorrichtung in verschiedenen Montagestellungen,
- Fig. 2a) - 2f): eine Vorder-, Seiten-, Rück- und Draufsicht, teilweise geschnitten, einer ersten Ausführungsform einer Spannklammer,
- Fig. 3a) - 3e): eine Vorder-, Seiten-, Rück- und Draufsicht einer ersten Ausführungsform eines Schließblechs,
- Fig. 4a) - 4e): eine Vorder-, Seiten-, Rück- und Draufsicht einer zweiten Ausführungsform eines Schließblechs,
- Fig. 5a) - 5c): eine Vorder-, Seiten- und Draufsicht einer zweiten Ausführungsform einer Spannvorrichtung in verschiedenen Montagestellungen,
- Fig. 6a) - 6f): eine Vorder-, Seiten-, Rück- und Draufsicht, teilweise geschnitten, einer zweiten Ausführungsform einer Spannklammer,
- Fig. 7a) -7e): eine Vorder-, Seiten-, Rück- und Draufsicht einer dritten Ausführungsform eines Schließblechs,
- Fig. 8a) - 8e): eine Vorder-, Seiten-, Rück- und Draufsicht einer vierten Ausführungsform eines Schließblechs,
- Fig. 9a) -9c): eine Vorder-, Seiten- und Draufsicht einer dritten Ausführungsform einer Spannvorrichtung in verschiedenen Montagestellungen,
- Fig. 10a) - 10f): eine Vorder-, Seiten-, Rück- und Draufsicht einer dritten Ausführungsform einer Spannklammer,
- Fig. 11a) - 11e): eine Vorder-, Seiten-, Rück- und Draufsicht einer fünften Ausführungsform eines Schließblechs,
- Fig. 12a) - 12c): eine Vorder-, Seiten- und Draufsicht einer vierten Ausführungsform einer Spannvorrichtung in verschiedenen Montagestellungen,
- Fig. 13a) - 13f): eine Vorder-, Seiten-, Rück- und Draufsicht einer vierten Ausführungsform einer Spannklammer,
- Fig. 14a) - 14e): eine Vorder-, Seiten-, Rück- und Draufsicht einer sechsten Ausführungsform eines Schließblechs,
- Fig. 15a) -15c): eine Vorder-, Seiten- und Draufsicht einer fünften Ausführungsform einer Spannvorrichtung,
- Fig. 16a) - 16g): eine Vorder-, Seiten-, Rück- und Draufsicht sowie Detailansichten einer vierten Ausführungsform einer Spannklammer,
- Fig. 17a) - 17e): eine Vorder-, Seiten-, Rück- und Draufsicht einer siebten Ausführungsform eines Schließblechs,
- Fig. 18a) -18c): eine Vorder-, Seiten- und Draufsicht einer sechsten Ausführungsform einer Spannvorrichtung,
- Fig. 19a) - 19g): eine Vorder-, Seiten-, Rück- und Draufsicht sowie Detailansichten einer fünften Ausführungsform einer Spannklammer,
- Fig. 20a) - 20e): eine Vorder-, Seiten-, Rück- und Draufsicht einer achten Ausführungsform eines Schließblechs,
- Fig. 21a) - 21d): eine Vorder- und mehrere Seitenansichten einer siebten Ausführungsform einer Spannvorrichtung in verschiedenen Montagestellungen,
- Fig. 22a) - 22b): eine Vorder-, Seiten- und Draufsicht einer sechsten Ausführungsform einer Spannklammer,
- Fi.g 23a) - 23e): eine Vorder-, Seiten- und Draufsicht einer neunten Ausführungsform eines Schließblechs,
- Fig. 24a) - 24d): eine Vorder- und mehrere Seitenansichten einer achten Ausführungsform einer Spannvorrichtung in verschiedenen Montagestellungen,
- Fig. 25a) - 25e): eine Vorder-, Seiten- und Draufsicht einer siebten Ausführungsform einer Spannklammer,
- Fig. 26a) - 26f): eine Vorder-, Seiten- und Draufsicht einer zehnten Ausführungsform eines Schließblechs,

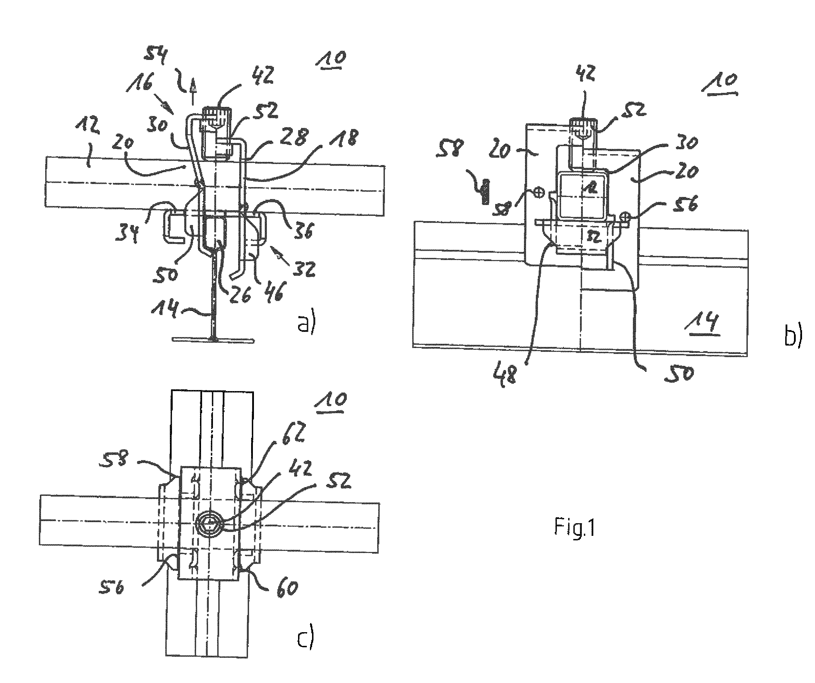

Die Fig. 1a) - 1c) zeigen in Vorder-, Seiten- und Draufsicht eine erste Ausführungsform einer Spann- bzw. Haltevorrichtung 10 zur Verbindung eines Profils 12 wie Vierkantprofil auf einem vorzugsweise von einer Decke (nicht dargestellt) abhängenden und quer zu dem ersten Profil verlaufenden zweiten Profil 14 wie T-Profil. Eine linke Bildhälfte der Figuren zeigt die Spann- bzw. Haltevorrichtung 10 jeweils in einem montierten Zustand und eine rechte Bildhälfte der Figuren zeigt die Spann- bzw. Haltevorrichtung 10 in einem vormontierten Zustand.

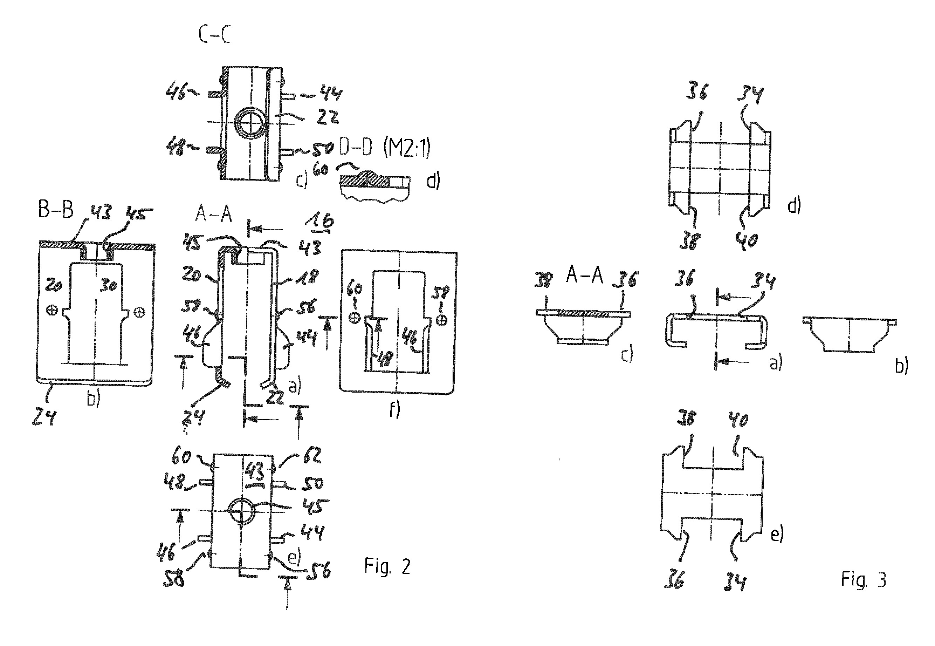

Die Haltevorrichtung 10 umfasst eine Spannklammer 16 die in den Fig. 2a) - 2f) in verschiedenen Ansichten, teilweise geschnitten, dargestellt ist. Die Spannklammer 16 umfasst zwei aufeinanderzu verstellbare Schenkel 18, 20, die mit Endabschnitten 22, 24 an einem oberen, vorzugsweise vierkantförmigen, deckenseitigen Abschnitt 26 des zweiten Profils 14 fixierbar sind. In den Schenkeln 18, 20 sind jeweils vorzugsweise rechteckförmige Aussparungen 28, 30 vorgesehen, in denen das Vierkantprofil in Längsrichtung aufgenommen ist.

Gemäß der Erfindung weist die Spann- bzw. Haltevorrichtung 10 ein mit den Schenkeln 18, 20 zusammenwirkendes Schließblech 32, 33 auf. Das Schließblech 32 ist in den Fig. 3a) - 3e) in einer ersten Ausführungsform in verschiedenen Ansichten dargestellt. An dem Schließblech 32 sind Anschläge 34, 36, 38, 40 vorgesehen, entlang der die Schenkel 18, 20 mittels eines vertikal oder im Wesentlichen vertikal verlaufenden Schraubelementes 42 wie Gewindestiftes bewegbar sind. Das Schraubelement 42 ist in einem die Schenkel 18, 20 verbindenden Abschnitt 43 in einem Gewinde 45 aufgenommen und verläuft im Wesentlichen parallel zu den Schenkeln 18, 20.

Von den Schenkeln 18, 20 springen Abschnitte 44, 46, 48, 50 vor, die mit den Anschlägen 34, 36, 38, 40 zusammenwirken und beim Drehen des Schraubelementes 42 gegen das erste Profil 12 ein Aufeinanderzuschwenken der Schenkel 18, 20 zum formschlüssigen Verbinden mit dem Abschnitt 26 des zweiten Profil bewirken.

In dem vormontierten Zustand (rechte Bildhälfte der Fig. 1a) - 1c)) durchsetzt das erste Profil 12 die Aussparungen 28, 30 der Spannklammer 16. Das Schließblech 32 ist in den Aussparungen 28, 30 der Schenkel 18, 20 aufgenommen und ist zwischen dem ersten Profil 12 und dem Abschnitt 26 des zweiten Profils 14 angeordnet.

In diesem Zustand liegen die vorspringenden Abschnitte 44, 46, 48, 50 noch nicht an den Anschlägen 34, 36, 38, 40 an und die Schenkel 18, 20 weisen einen geraden Verlauf auf.

Durch Drehen des Gewindestiftes 42 in dem Gewinde 45 bewegt sich die Spannklammer 16 in Richtung des Pfeils 54, wobei die vorspringenden Abschnitte 44, 46, 48, 50 der Schenkel 18, 20 gegen die Anschläge 34, 36, 38, 40 des Schließbleches mit Kraft beaufschlagt werden mit der Folge, dass zumindest die unteren Abschnitte der Schenkel 18, 20 aufeinanderzu schwenken, um eine formschlüssige Verbindung mit dem Abschnitt 26 einzugehen. In dieser Stellung wird das erste Profil 12 über den Gewindestift 42 gegen das Schließblech 32 mit Kraft beaufschlagt, während das zweite Profil 14 mit dem Abschnitt 26 durch die Enden 22, 24 der Schenkel 18, 20 formschlüssig erfasst und mit Kraft beaufschlagt gegen das Schließblech 32 anliegt.

Folglich wird eine Vertikalbewegung (Drehen des Gewindestiftes 42) in Richtung des Pfeils 54 in eine Horizontalbewegung (Verschwenken der Schenkel 18, 20) umgesetzt, um die formschlüssige Verbindung der Schenkel mit dem Abschnitt 26 zu ermöglichen.

Damit das Schließblech 32 in einem vorkonfektionierten Zustand der Haltevorrichtung 10, d. h. dann, wenn das Schließblech 32 die Aussparungen 28, 30 der Schenkel 18, 20 durchsetzt, fixiert ist, und somit einen einfachen Einbau bzw. einfaches Handling zu gewährleisten ist vorgesehen, dass von dem Schenkel knopfförmige Vorsprünge 56, 58, 60, 62 ausgehen, um das Schließblech 32 in einem Bereich zwischen einem oberen rampenförmigen Rand der vorspringenden Abschnitte 44, 46, 48, 50 und den knopfförmigen Vorsprüngen 56, 58, 60, 62 zu fixieren bzw. zu begrenzen.

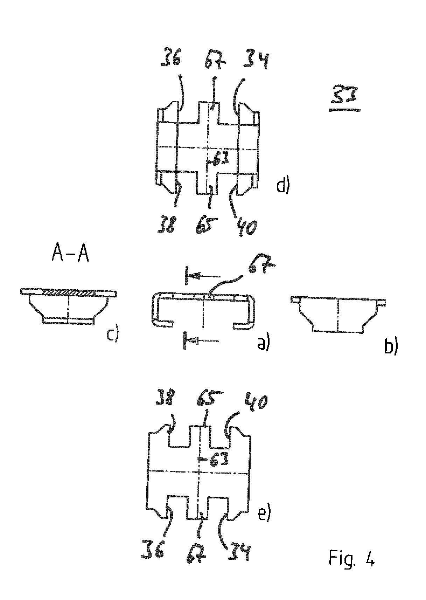

Die Fig. 4a) bis 4e) zeigen das Schließblech 33 in einer zweiten Ausführungsform in verschiedenen Ansichten, wobei gleiche Merkmale mit gleichen Bezugszeichen versehen sind.

Das Schließblech 33 unterscheidet sich von der ersten Ausführungsform des Schließblechs 32 dadurch, dass sich parallel oder im Wesentlichen parallel zu den Anschlägen 34, 36, 38, 40 entlang einer Mittellinie 63 des Schließblechs zwei gegenüberliegende Stege 65, 67 erstrecken, wodurch eine Auflagebreite zum Abschnitt 26 der T-Profilschiene 14 vergrößert wird. Dadurch wird die Montage der Spannvorrichtung vereinfacht, da die Spannvorrichtung im vormontierten Zustand entlang der Mittellinie 63 auf den deckenseitigen Abschnitt 26 des T-Profils 14 sicher aufgelegt werden kann.

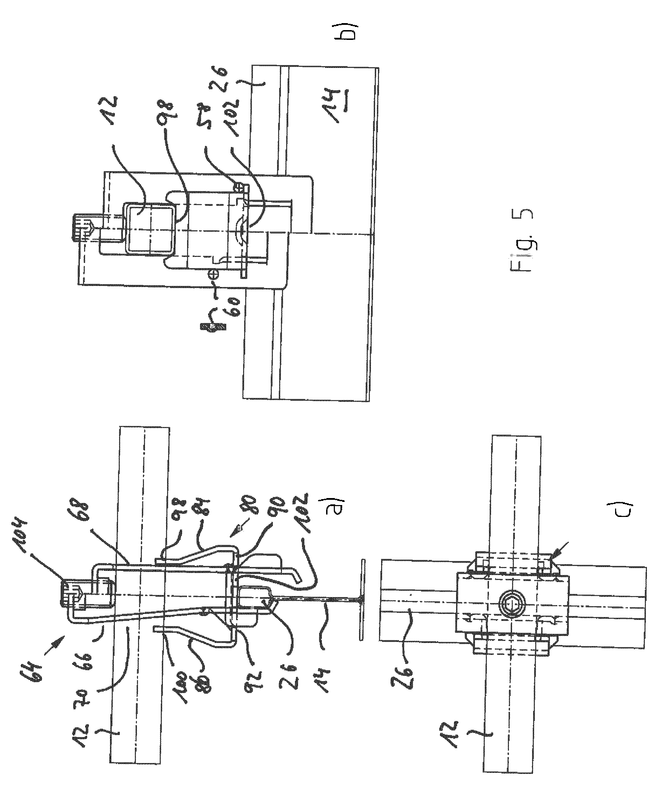

Die Fig. 5a) bis 5c) zeigen eine zweite Ausführungsform einer Spannvorrichtung 64, mit der das erste Profil 12 mit Abstand zu dem zweiten Profil 14 verbunden werden kann.

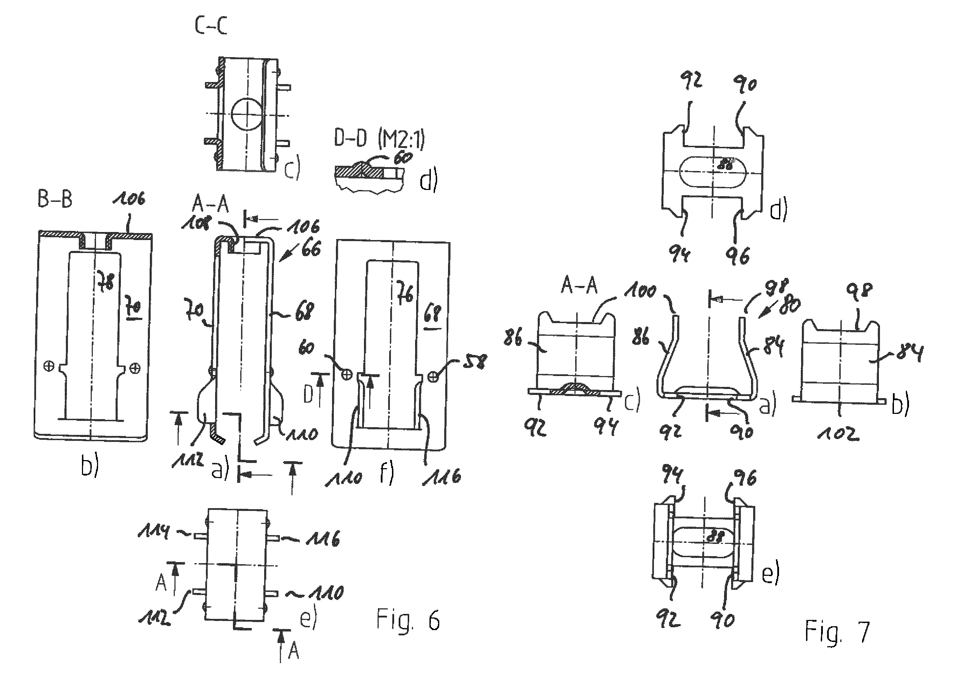

Die Spannvorrichtung 64 umfasst eine Spannklammer 66 die in den Fig. 6a) bis 6f) in verschiedenen Ansichten, teilweise geschnitten, dargestellt ist. Die Spannklammer 66 umfasst zwei aufeinanderzu verstellbare Schenkel 68, 70, die mit Endabschnitten 72, 74 an dem oberen, deckenseitigen Abschnitt 26 des zweiten Profils 14 fixierbar sind. In den Schenkeln 68, 70 sind jeweils vorzugsweise rechteckförmige Aussparungen 76,78 vorgesehen, in denen das Vierkantprofil in Längsrichtung aufgenommen ist.

Gemäß der Erfindung weist die Spannvorrichtung 64 ein mit den Schenkeln 68, 70 zusammenwirkendes Schließblech 80, 81 auf.

Die Fig. 7a) bis 7e) zeigen eine dritte Ausführungsform des Schließblechs in verschiedenen Ansichten. Das Schließblech 80 ist im Wesentlichen U-förmig ausgebildet mit seitlichen Schenkeln 84, 86, die über einen Abschnitt 88 miteinander verbunden sind. Der Abschnitt 80 weist Anschläge 90, 92, 94, 96 auf, die durch Aussparungen in Randabschnitten des Abschnittes ausgebildet sind.

Randseitige Enden 98, 100 der Schenkel 84, 86 bilden eine erste Abstützung, die gegen eine Unterseite des ersten Profils 12 anliegt, während eine Unterseite 102 des Abschnittes 88 einen zweiten Anschlag bildet, der auf einer Oberseite des Abschnitts 26 des zweiten Profils 14 aufliegt. Durch die Länge der Schenkel 84, 86 kann der Abstand zwischen dem ersten Profil 12 und dem zweiten Profil 14 definiert werden.

Die Spannklammer 66 ist mittels eines vertikal oder im Wesentlichen vertikal verlaufenden Schraubelementes 104 wie Gewindestiftes quer zur Längsrichtung des ersten Profils 12 und relativ zu dem Schließblech 80 bewegbar. Das Schraubelement 90 ist in einem die Schenkel 68, 70 verbindenden Abschnitt 106 in einem Gewinde 108 aufgenommen und verläuft im Wesentlichen parallel zu den Schenkeln 68, 70.

Von den Schenkeln 68, 70 springen Abschnitte 110, 112, 114, 116 vor, die mit den Anschlägen 90, 92, 94, 96 zusammenwirken und beim Drehen des Schraubelementes 104 gegen das erste Profil 12 ein Aufeinanderzuschwenken der Schenkel 68, 70 zum formschlüssigen Verbinden mit dem Abschnitt 26 des zweiten Profil bewirken.

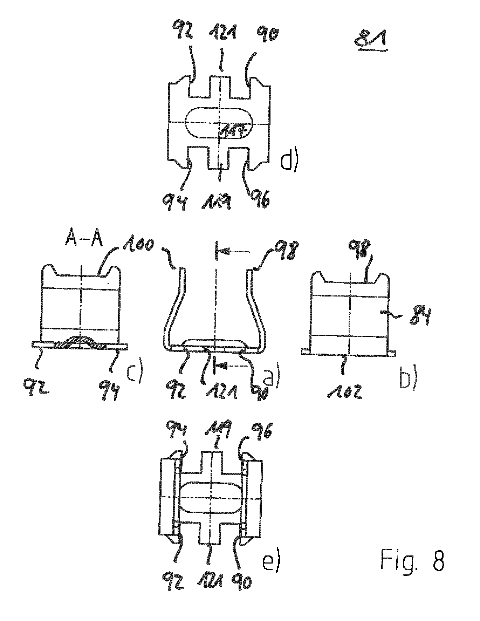

Die Fig. 8a) bis 8e) zeigen das Schließblech 81 in verschiedenen Ansichten in einer vierten Ausführungsform, wobei identische Merkmale mit identischen Bezugszeichen bezeichnet sind. Das Schließblech 81 unterscheidet sich von dem Schließblech 80 dadurch, dass entlang einer Mittellinie 117, die parallel oder im Wesentlichen parallel zu den Anschlagsflächen 90, 92, 94, 96 verläuft, Stege 119, 121 gegenüberliegend angeordnet sind, um eine Auflagefläche bzw. Auflagebreite der Schließklammer auf den deckenseitigen Abschnitt 26 des T-Profils 14 zu vergrößern.

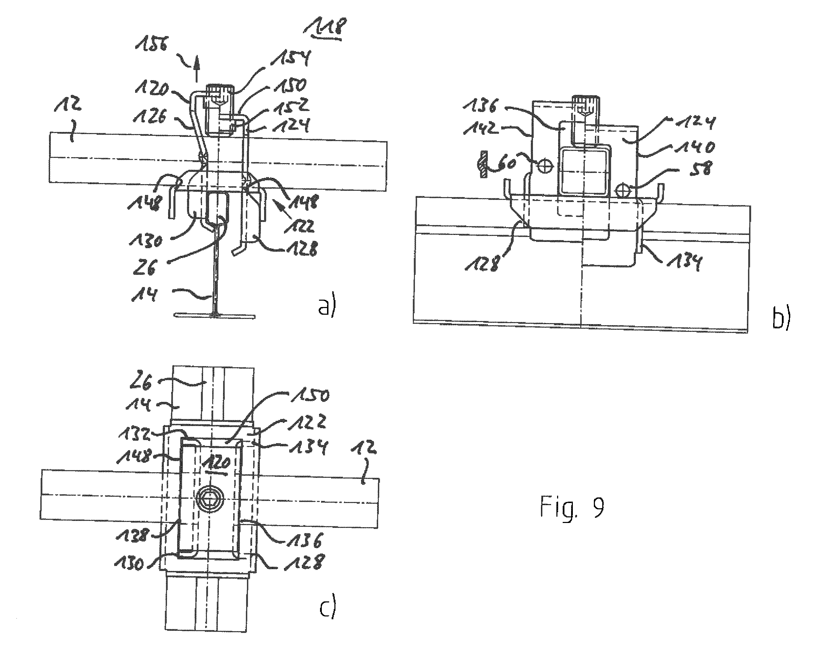

Fig. 9a) bis 9c) zeigen eine dritte Ausführungsform einer Spann- bzw. Haltevorrichtung 118 mit einer dritten Ausführungsform einer Spannklammer 120 und einer dritten Ausführungsform eines Schließblechs 122.

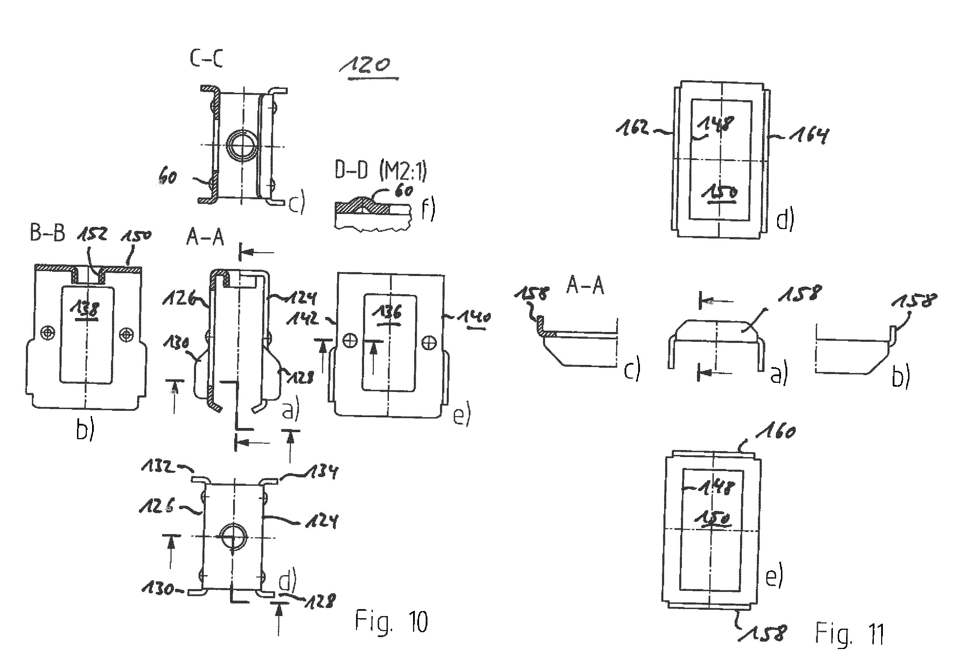

Die Fig. 10a) bis 10f) zeigen die Spannklammer 120 in verschiedenen Ansichten, wobei Fig. 10a) eine Vorderansicht, teilweise geschnitten, Fig. 10b) eine Seitenansicht geschnitten entlang der Schnittlinie B-B, Fig. 10c) eine Unteransicht, teilweise geschnitten entlang der Schnittlinie C-C, Fig. 10d) eine Draufsicht und Fig. 10e) eine Seitenansicht von links zeigen. Fig. 10f) zeigt im Detail einen knopfförmigen Vorsprung 60 zur Fixierung des Schließblechs.

Die Spannklammer 120 unterscheidet sich von der Spannklammer 16 gemäß Fig. 1 dadurch, dass von Schenkeln 124, 126 vorspringende Abschnitte 128, 130, 132, 134 nicht von einem inneren Rand von Aussparungen 136, 138, sondern jeweils von einem äußeren Rand 140, 142, 144, 146 der Schenkel 124, 126 vorspringen.

Die Fig. 11a) bis 11e) zeigen verschiedene Ansichten des Schließblechs 122, wobei Fig. 11a) eine Vorderansicht, Fig. 11b) eine Seitenansicht von links, Fig. 11c) eine Seitenansicht von rechts, teilweise geschnitten entlang der Schnittlinie A-A, Fig. 11d) eine Unteransicht und Fig. 11e) eine Draufsicht zeigt.

Das Schließblech weist eine einen Innenrahmen 148 bildende Aussparung 150 auf, in der die Spannklammer längsbeweglich aufgenommen ist. Eine Drehbewegung eines in einem die Schenkel verbindenden Abschnitt 150 in einem Gewinde 152 aufgenommenen Schraubelements 154 in Richtung des Pfeils 156 gegen das erste Profil bewirkt eine Relativbewegung der Spannklammer gegen das Schließblech. Dadurch gelangen die Abschnitte 128, 130, 132, 134 mit ihrem rampenförmigen Rand in Kontakt mit dem Innenrahmens 148 des Schließbleches. Der Innenrahmen 148 bildet einen Anschlag, so dass eine weitere Verstellung der Spannklammer ein Aufeinanderzubewegen der Schenkel 124, 126 bewirkt.

Randseitig ist die fünfte Ausführungsform des Schließblechs 122 mit Verstärkungsrippen 158, 160, 162, 164 ausgebildet. Das Schließblech 122 ist vorzugsweise als Formteil insbesondere Stanzteil ausgebildet, wobei die Verstärkungsrippen 158, 160, 162, 164 aus dem Flachmaterial rechtwinklig abgebogen sind.

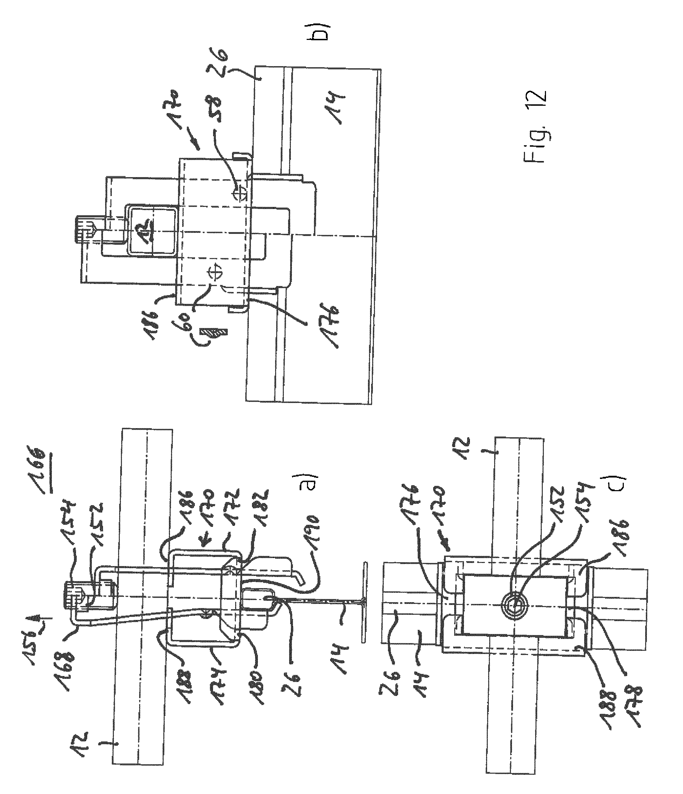

Die Fig. 12a) bis 12c) zeigen eine Vorder-, Seiten- und Draufsicht einer vierten Ausführungsform einer Spannvorrichtung 166 mit einer vierten Ausführungsform einer Spannklammer 168 und einer sechsten Ausführungsform eines Schließbleches 170.

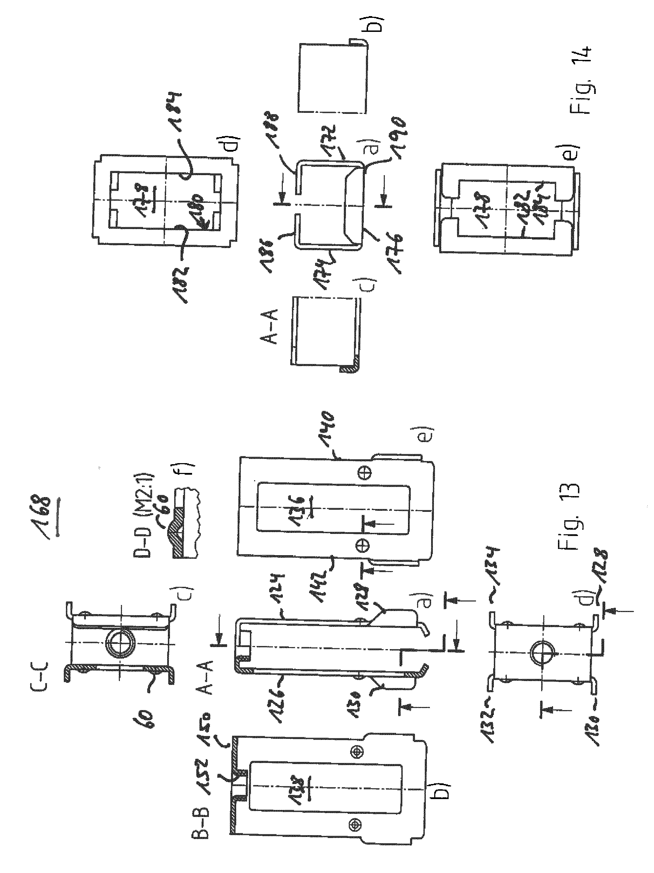

Die Fig. 13a) bis 13f) zeigen die Spannklammer 168 in verschiedenen Ansichten, wobei Fig. 13a) eine Draufsicht, Fig. 13b) eine Vorderansicht, teilweise geschnitten entlang der Schnittlinie A-A gemäß Fig. 13a), Fig. 13c) eine Unteransicht, teilweise geschnitten entlang der Schnittlinie C-C gemäß Fig. 13b), Fig. 13d) eine Schnittdarstellung entlang der Schnittlinie B-B gemäß Fig. 13b) und Fig. 13e) eine Seitenansicht von links zeigt. Fig. 13f) zeigt im Detail einen knopfförmigen Vorsprung 60 zur Fixierung des Schließblechs.

Die Fig. 14a) bis 14e) zeigen das Schließblech 170 in verschiedenen Ansichten, wobei Fig. 14a) eine Vorderansicht, Fig. 14c) eine Seitenansicht entlang der Schnittlinie A-A gemäß Fig. 14a), Fig. 14b) eine Seitenansicht von links, Fig. 14e) eine Draufsicht und Fig. 14d) eine Unteransicht zeigt.

Die sechste Ausführungsform des Schließbleches 170 wird dann verwendet, wenn ein Abstand zwischen dem ersten Profil 12 und dem zweiten Profil 14 gewünscht bzw. erforderlich ist, beispielsweise wenn eine Höhenanpassung zwischen dem ersten Profil 12 und einer abgehängten Decke zur Einpassung eines Sprinklersystems erforderlich ist.

Das Schließblech 170 ist im Wesentlichen U-förmig ausgebildet und umfasst Schenkel 172, 174, die über einen Abschnitt 176 miteinander verbunden sind. In dem Abschnitt 176 ist eine Aussparung 178 zur Bildung eines Innenrahmens 180 eingebracht, durch den Anschläge 182, 184 gebildet werden. Die Schenkel 172, 174 sind endseitig nach innen zueinander umgewinkelt, um erste Abstützungen 186, 188 zu bilden, die gegen eine Unterseite des ersten Profil 12 anliegen. Eine Unterseite 190 des Abschnittes 176 bildet eine zweite Abstützung, die gegen eine Oberseite des Abschnitts 26 des zweiten Profils 14 anliegt.

Eine Montage und das Verspannen erfolgt in an sich bekannter Weise, wie dies bereits zuvor erläutert wurde.

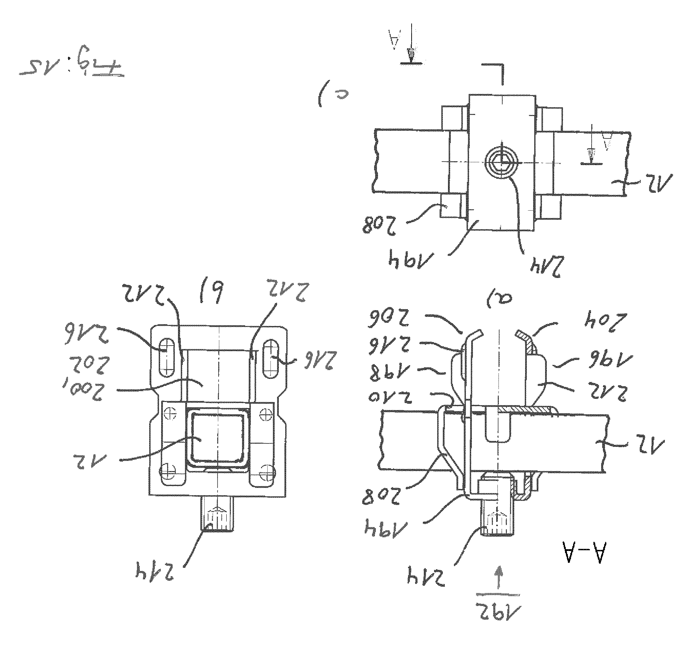

Fig. 15a) bis 15c) zeigen in Vorder-, Seiten- und Draufsicht eine fünfte Ausführungsform einer Spannvorrichtung 192 zum Verbinden eines ersten Profils 12 mit einem quer zu dem ersten Profil verlaufenden zweiten Profil 14. Die Spannvorrichtung 192 umfasst eine Spannklammer 194 mit zwei aufeinanderzu verstellbaren Schenkeln 196, 198 mit jeweils einer Aussparung 200, 202 zur Aufnahme und Fixierung des ersten Profils 12 sowie mit jeweils einem Endabschnitt 204, 206 zur Fixierung der Klammer 194 an dem Abschnitt 26 des zweiten Profils 14 (in Fig. 15 nicht dargestellt).

Die Spannvorrichtung 192 umfasst des Weiteren ein mit den Schenkeln 196, 198 der Spannklammer zusammenwirkendes Schließblech 208 mit Anschlägen 210, die mit von den Schenkeln 196, 198 vorspringenden Abschnitten 212 bei einer Relativbewegung zwischen der Spannvorrichtung 194 und der Spannklammer 208 derart zusammenwirken, dass die Schenkel aufeinanderzu bewegt werden. Zur Erzeugung einer Relativbewegung zwischen den Schenkeln 196, 198 und dem Schließblech 208 ist in einem die Schenkel 196, 198 verbindenden Abschnitt ein Schraubelement 214 angeordnet, welches gegen das erste Profil 12 abstützbar ist, so dass ein Drehen des Schraubelementes 214 das Aufeinanderzubewegen der Schenkel zum formschlüssigen Verbinden der Endabschnitte 204, 206 mit dem Abschnitt 26 des zweiten Profils 14 bewirkt.

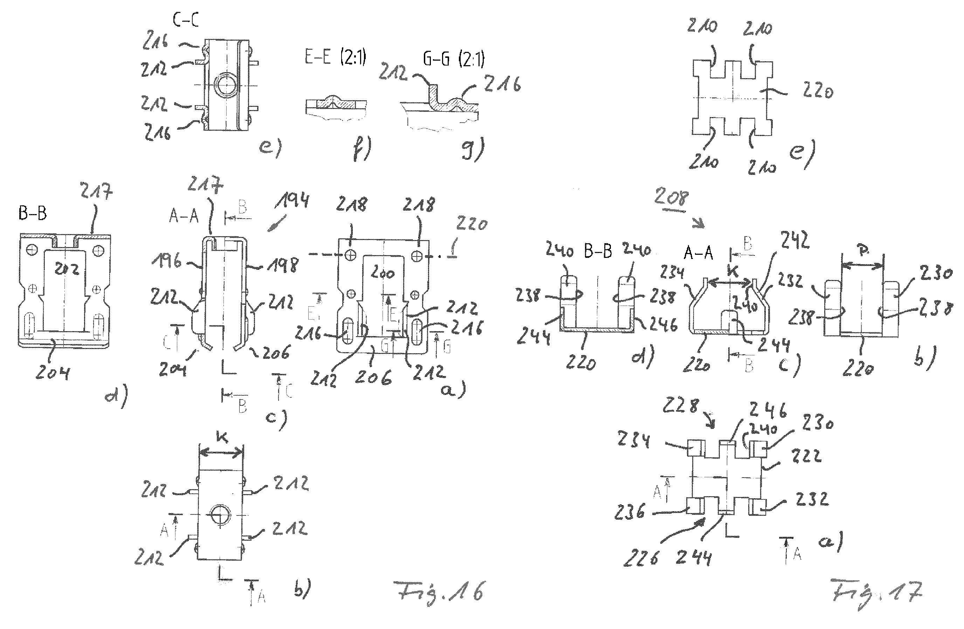

Die Spannklammer 194 ist in Fig. 16a) - 16g) in verschiedenen Ansichten dargestellt. Die Spannklammer 192 unterscheidet sich von den Ausführungen der Spannklammer 16 gemäß Fig. 2 bzw. der Spannklammer 66 gemäß Fig. 6 dadurch, dass die an dem Abschnitt 26 des zweiten Profils 14 anliegenden Endabschnitte 204, 206 randseitig vorzugsweise längliche nach außen geprägte Ausformungen 216 zur Versteifung der Schenkel 196, 198 im unteren Bereich gegen Verbiegen aufweisen.

Die geprägten Ausformungen 216 erstrecken sich parallel zu Seitenrändern der Seitenabschnitte 204, 206. Die gezeigte Ausführungsform der Spannvorrichtung 192 zeichnet sich des Weiteren dadurch aus, dass in einem Übergangsbereich zwischen den Schenkeln 196, 198 und einem die Schenkel verbindenden Abschnitt 217 Durchbrechungen 218 in Randabschnitten der Schenkel 196, 198 vorgesehen sind, um eine gezielte Materialschwächung im Bereich einer Biegelinie 220 zu erreichen, wodurch eine vereinfachte Montage ermöglicht wird.

Fig. 17a) bis 17e) zeigen das Schließblech 208 in verschiedenen Ansichten. Das Schließblech 208 umfasst eine Grundplatte 220, in der die Anschläge 210, welche mit den von den Schenkeln 196, 198 vorspringenden Abschnitten 212 zusammenwirken, als Aussparungen eingeformt sind, wie in der Unteransicht (Fig. 17e) dargestellt ist.

Fig. 17 a) zeigt eine Draufsicht auf das Schließblech 208. Die Grundplatte 220 umfasst Querränder 222, 224, die im montierten Zustand quer zu der Längsausrichtung des ersten Profils 12 verlaufen sowie Längsränder 226, 228, die im montierten Zustand parallel zur Längsrichtung des ersten Profils 12 verlaufen. Um ein seitliches Wegkippen bei der Montage des Schließbleches zu verhindern, ist vorgesehen, dass sich von gegenüberliegenden seitlichen Randabschnitten der Querränder 222, 224 jeweils rechtwinklige Schenkel 230, 232 bzw. 234, 236 erstrecken, die jeweils Innenflächen 238 aufweisen, die im montierten Zustand an einer Außenfläche des ersten Profils anliegen, um ein seitliches Wegkippen zu verhindern, wie in Fig. 15b) dargestellt.

Gemäß Fig. 17c) sind die Schenkel 230, 232, 234, 236 derart abgewinkelt, dass deren Enden einen Abstand K voneinander aufweisen, der einer Breite K der Spannklammer 194 entspricht, so dass Schließblech 208 einerseits durch die Innenflächen 238 des Schenkels 230, 232, 234, 236 an dem Profil 12 und andererseits durch die Innenflächen 240 der abgewinkelten Enden 242 der Schenkel 230, 232, 234, 236 an der Spannklammer 194 anliegen.

Des Weiteren erstrecken sich von den Längsrändern 226, 228 gegenüberliegend jeweils ein weiterer Schenkel 244, 246, der gegenüber den Schenkeln 230, 232, 234, 236 kürzer ausgebildet und rechtwinklig zu der Grundplatte 220 abgewinkelt ist und gerade verläuft.

Die kurzen, geraden Schenkel 244, 246 dienen zur inneren Abstützung der Spannklammer 194 und verhindern, dass die Spannklammer 194 bei Montage nach innen einfällt.

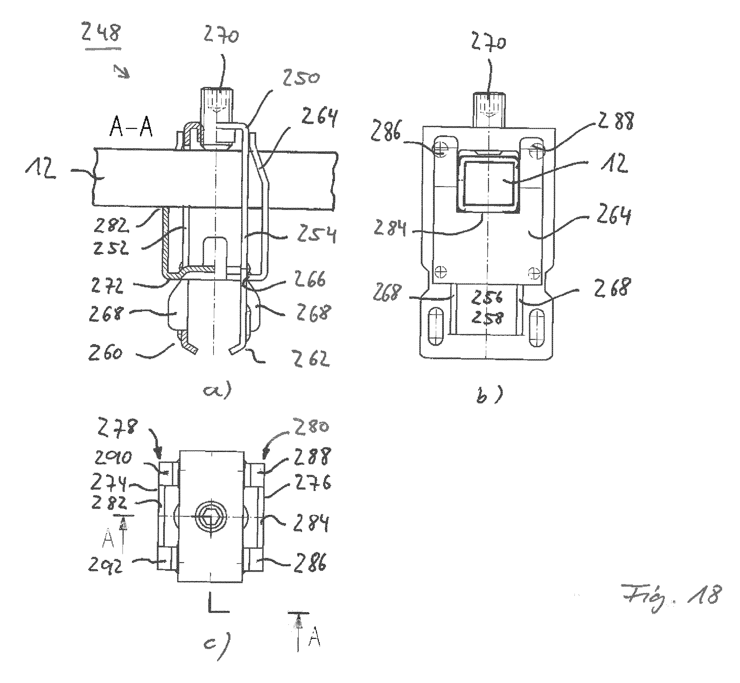

Fig. 18a) bis 18c) zeigen in Vorder-, Seiten- und Draufsicht eine sechste Ausführungsform einer Spannvorrichtung 248 zum Verbinden des ersten Profils 12 mit dem beabstandet quer zu dem ersten Profil verlaufenden Abschnitt 26 des zweiten Profils 14 (in Fig. 18 nicht dargestellt). Die Spannvorrichtung 248 umfasst eine Spannklammer 250 mit zwei aufeinanderzu verstellbaren Schenkeln 252, 254 mit jeweils einer Aussparung 256, 258 zur Aufnahme und Fixierung des ersten Profils 12 und mit jeweils einem Endabschnitt 260, 262 zur Fixierung an den Abschnitt 26 des zweiten Profils 14.

Die Spannvorrichtung 248 umfasst des Weiteren ein mit den Schenkeln 252, 254 der Spannklammer 250 zusammenwirkendes Schließblech 264. Das Schließblech 264 bildet Anschläge 266, die mit von den Schenkeln im Wesentlichen rechtwinklig vorspringenden Abschnitten 268 bei einer Relativbewegung zwischen der Spannklammer 250 und dem Schließblech 264 derart zusammenwirken, dass die Schenkel 250, 254 aufeinanderzu bewegt werden.

Zur Erzeugung einer Relativbewegung zwischen den Schenkeln 252, 254 und dem Schließblech 264 weist die Spannklammer 250 ein Schraubelement 270 auf, welches gegen das erste Profil 12 abstützbar ist, so dass durch Drehen des Schraubelementes ein Aufeinanderzubewegen der Schenkel 252, 254 zum formschlüssigen Verbinden der Endabschnitte 260, 262 mit dem Abschnitt 26 des zweiten Profils 14 bewirkt wird.

Die in Fig. 18 dargestellte Ausführungsform der Spannvorrichtung 248 unterscheidet sich von der in Fig. 15 dargestellten Ausführungsform der Spannvorrichtung 192 dadurch, dass der Abschnitt 26 des zweiten Profils definiert beabstandet zu dem ersten Profil angeordnet ist.

Zur Definition des Abstandes ist vorgesehen, dass das Schließblech 264 ausgehend von einer Grundplatte 272 entlang von zur Längserstreckung des Profils 12 quer verlaufenden Rändern 274, 276 jeweils Schenkel 278, 280 aufweist, die oberseitig jeweils einen Anschlag 282, 284 bilden, auf dem eine Unterseite des Profils 12 abstützbar ist. Zur vereinfachten Montage ist des Weiteren vorgesehen, dass sich seitlich über den Anschlag 282, 284 hinaus Schenkelabschnitte 286, 288, 290, 292 erstrecken, deren Innenflächen im montierten Zustand an einer Außenfläche des ersten Profils 12 anliegen und eine Führung bilden, um ein seitliches Wegkippen des Schließbleches bei Montage zu verhindern, wie in Fig. 18b) dargestellt.

Des Weiteren ist vorgesehen, dass entlang von Längsrändern der Grundplatte 272 Schenkel 294 zur inneren Abstützung der Spannklammer 250 rechtwinklig abgewinkelt vorgesehen sind, wodurch ein Abfallen der Spannklammer 250 bei Montage verhindert wird.

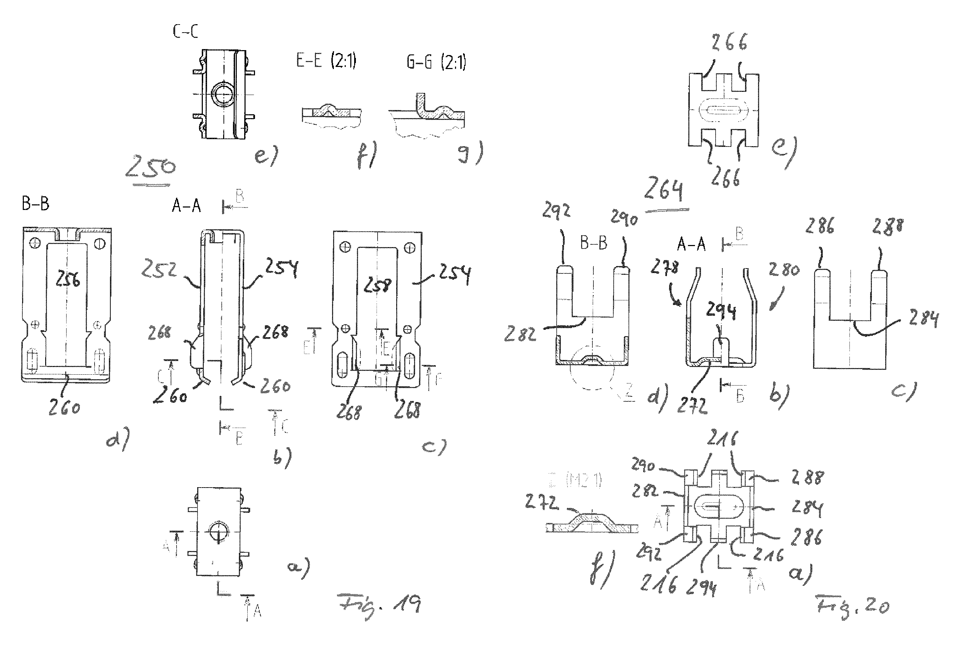

Einzelheiten der Spannklammer 250 sowie des Schließbleches 264 sind in den Fig. 19a) bis 19g) sowie 20a) bis 20e) dargestellt.

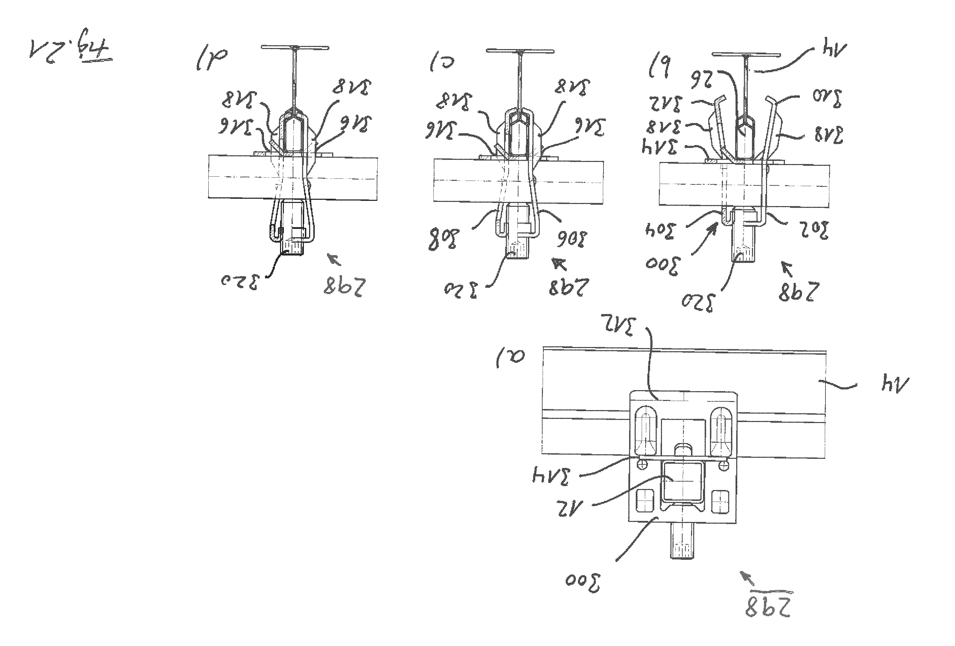

Fig. 21a) bis 21d) zeigen eine besonders bevorzugte Ausführungsform einer Spannvorrichtung 298 zum Verbinden des ersten Profils 12 mit dem quer zu dem ersten Profil 12 verlaufenden zweiten Profil 14. Die Spannvorrichtung 298 umfasst eine Spannklammer 300 mit zwei aufeinanderzu verstellbaren Schenkeln 302, 304 mit jeweils einer Aussparung 306, 308 zur Aufnahme und Fixierung des ersten Profils 12.

Die Schenkel 302, 304 weisen jeweils einen Endabschnitt 310, 312 zur Fixierung des Abschnitts 26 des zweiten Profils 14 gegen das erste Profil 12.

Die Spannvorrichtung 298 umfasst des Weiteren ein mit den Schenkeln 302, 304 der Spannklammer 300 zusammenwirkendes Schließblech 314 mit Anschlägen 316, die mit von den Schenkeln vorspringenden Abschnitten 318 in Form von Materialauswölbungen bei einer Relativbewegung zwischen der Spannklammer 300 und dem Schließblech 314 derart zusammenwirken, dass die Schenkel, wie in Fig. 21c) und 21d) dargestellt, aufeinanderzu bewegt werden. Zur Erzeugung der Relativbewegung zwischen den Schenkeln 302, 304 und dem Schließblech 314 ist in einem die Schenkel 302, 304 verbindenden Abschnitt ein Schraubelement 320 angeordnet, welches gegen das erste Profil 12 durch Drehen kraftbeaufschlagbar ist, so dass durch Drehen des Schraubelementes die Schenkel 302, 304 quer zu dem gegen eine Unterseite des ersten Profils 12 anliegenden Schließblechs 314 bewegbar sind. Durch die Relativbewegung gelangen die Auswölbungen 318 in Kontakt mit den Anschlägen 320 des Schließblechs 314 und bewirken das Aufeinanderzubewegen der Schenkel zum formschlüssigen Verbinden der Endabschnitte 310, 312 mit dem Abschnitt 26 des zweiten Profils 14, wie dies in Fig. 21d) in Endstellung dargestellt ist. Dabei liegen die Endabschnitte 310, 312 im Wesentlichen parallel an Seitenwandungen des Abschnitts 26 des zweiten Profils 14 an um dieses zu fixieren.

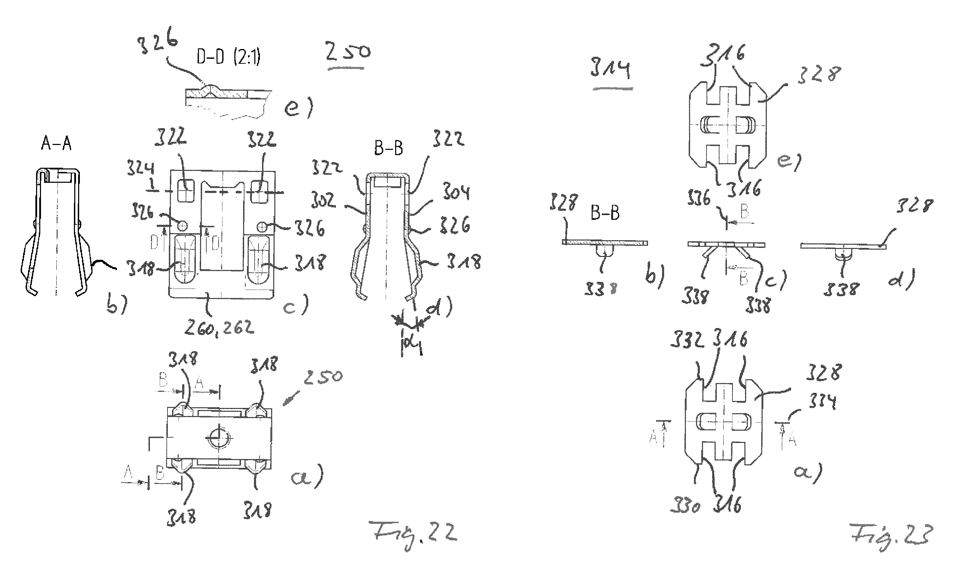

Fig. 22a) bis 22e) zeigen die Spannklammer 250 in verschiedenen Ansichten. Die Spannklammer 250 zeichnet sich gegenüber den zuvor beschriebenen Ausführungsformen der Spannklammern 16, 66, 120, 168, 194 dadurch aus, dass die Anschläge 318 als Materialauswölbungen bzw. Prägungen in den Schenkeln 302, 304 der Spannklammer 250 ausgebildet sind. Dadurch wird einerseits eine Versteifung der Endabschnitte 260, 262 der Schenkel 302, 304 bis in den unteren Bereich und andererseits eine größere Auflagefläche der vorspringenden Abschnitte 318 gegen die Anschläge 316 des Schließbleches 314 erreicht, an denen die vorspringenden Abschnitte 318 beim Schließen entlanggleiten. Da im Innenbereich der Klammer keine Vertiefungen entstehen, wird die seitliche Führung der Klammer an dem Profil verbessert.

Als weiteres Unterscheidungsmerkmal insbesondere gegenüber den Ausführungsformen der Spannklammern 16, 66 ist zu erwähnen, dass im Bereich des die Schenkel 302, 304 verbindenden Abschnitts in den Schenkeln 302, 304 jeweils Durchbrechungen 322 eingebracht sind, die eine gezielte Materialschwächung der Schenkel 302, 304 bewirken. Dadurch wird der Vorteil erreicht, dass beim Schließen der Spannklammer 250, d. h. beim Aufeinanderzubewegen der Schenkel 302, 304 durch die Drehbewegung des Schraubelementes 320 aufgrund der geringeren Biegespannung weniger Kraftaufwand erforderlich ist. Die Folge ist eine elastische und geringe plastische Verformung der Schenkel 302, 304 entlang einer Biegelinie 324, wodurch ein seitliches Verziehen der Spannklammer 250 vermieden wird.

In vertikaler Richtung oberhalb der vorspringenden Ausprägungen 318 sind Wölbungen 326 vorgesehen. Das Schließblech ist zwischen den Wölbungen 326 und den Ausprägungen 318 fixiert.

Des Weiteren wird durch die Materialschwächung eine gezielte Verformung bzw. Biegung im oberen Bereich der Schenkel 302, 304 entlang der Biegelinie 324 und somit die Einhaltung der vorgesehenen Biegewinkel ermöglicht.

Die Fig. 22b), 22d) zeigen des Weiteren, dass die Endabschnitte 260, 262 der Schenkel bereits vor der Montage in einem definierten Winkel α nach außen gebogen sind, so dass nach dem Schließen die Endabschnitte 260, 262 parallel verlaufen, ohne dass eine Verformung im Mittelbereich resultiert.

Fig. 23 a) bis 23e) zeigen das Schließblech 314 in verschiedenen Ansichten. Das Schließblech 314 besteht aus einer Grundplatte 328, in dessen Längsrändern 330, 332 Aussparungen zur Bildung der Anschläge 316 eingeformt sind.

Fig. 23c zeigt eine Schnittdarstellung entlang der Schnittlinie A-A gemäß Fig. 23a), wobei die Grundplatte 328 entlang einer Längsachse 334 zwei in Richtung zu einer Vertikalachse 336 gebogene Ausklinkungen 338 aufweist, die in etwa einem Winkel von 45° zu einer von der Grundplatte 328 aufgespannten Ebene abgebogen sind. Durch die zwei innenliegenden Ausklinkungen 338 wird eine prismatische Zentrierung gebildet, wodurch die Positionierung, d. h. seitliche Ausrichtung der Spannklammer 250 auf der Profilschiene verbessert wird und zusätzlich eine Klemmung im unteren Bereich nach dem Schließen der Spannklammer 250 erreicht wird.

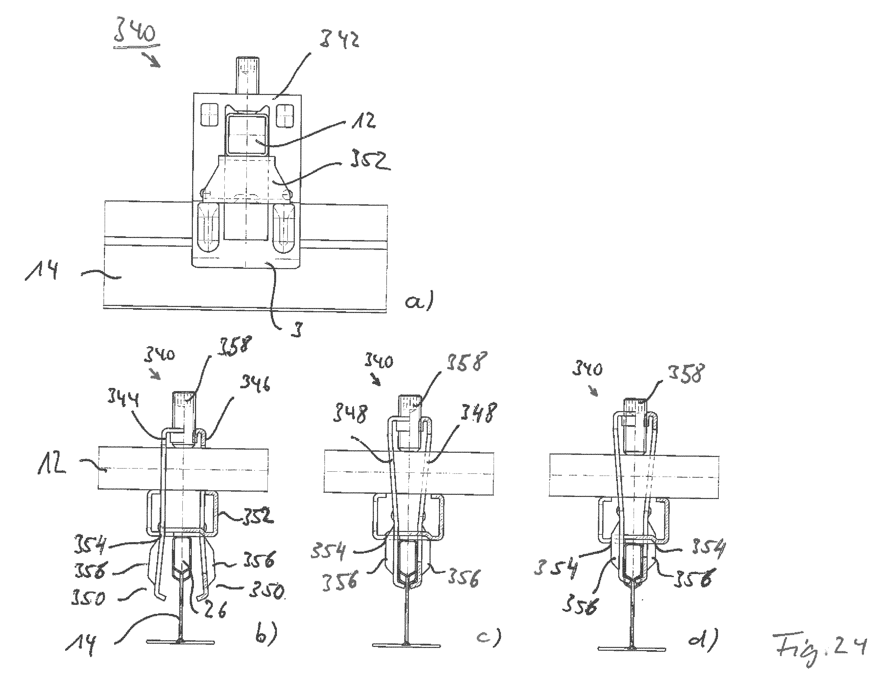

Fig. 24 zeigt eine weitere Variante einer Spannvorrichtung 340 zum Verbinden des ersten Profils 12 mit dem quer zu dem ersten Profil verlaufenden zweiten Profil 14, wobei das zweite Profil 14 mit Abstand zu dem ersten Profil 12 angeordnet ist. Die Spannvorrichtung 340 umfasst eine Spannklammer 342 mit zwei aufeinanderzu verschwenkbaren Schenkeln 344, 346 mit jeweils einer Aussparung 348 zur Aufnahme und Fixierung des ersten Profils 12. Des Weiteren weist jeder der Schenkel 344, 346 einen Endabschnitt 350 zur Fixierung des Abschnitts 26 des Profils 14 auf, wie dies in den Fig. 24b) bis 24d) dargestellt ist.

Die Spannvorrichtung 340 umfasst des Weiteren ein mit den Schenkeln 344, 346 der Spannklammer zusammenwirkendes Schließblech 352, wobei an dem Schließblech Anschläge 354 ausgebildet sind, die mit von den Schenkeln 344, 346 vorspringenden Abschnitten 356 in Form von Auswölbungen bzw. Prägungen bei einer Relativbewegung zwischen der Spannklammer 342 und dem Schließblech 352 derart zusammenwirken, dass die Schenkel aufeinanderzu bewegt werden, wie dies in den Fig. 24b) bis 24d) dargestellt ist.

Zur Erzeugung einer Relativbewegung zwischen der Spannklammer 342 und dem Schließblech 352 ist in einem die Schenkel 344, 346 verbindenden Abschnitt ein Schraubelement 358 angeordnet, welches gegen das erste Profil 12 durch Drehen kraftbeaufschlagbar ist, so dass ein Drehen des Schraubelementes das Aufeinanderzubewegen der Schenkel zum formschlüssigen Verbinden der Endabschnitte mit dem Abschnitt 26 des zweiten Profils 14 bewirkt.

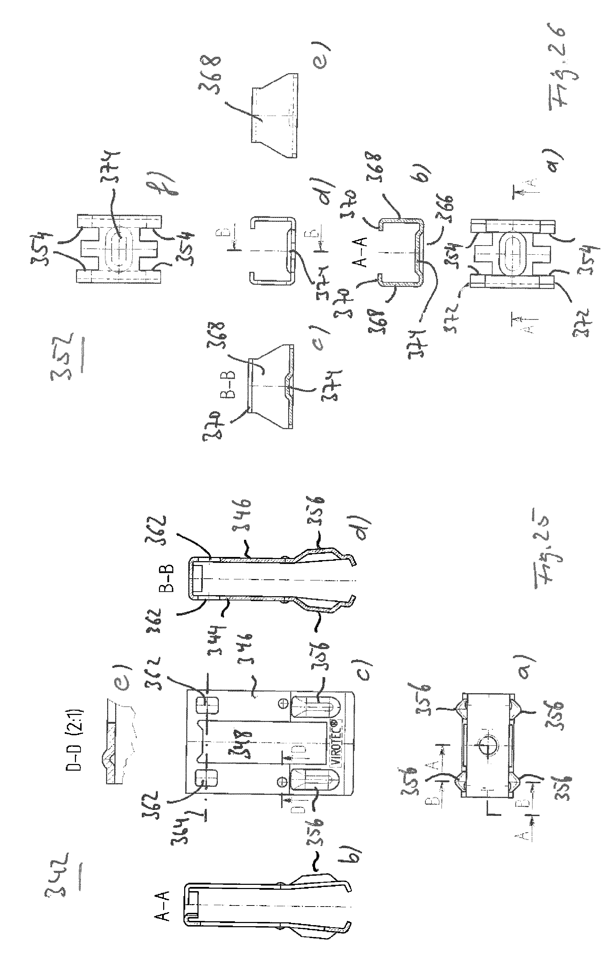

Die Spannklammer 342 ist in Fig. 25a) bis 25e) in verschiedenen Ansichten dargestellt und entspricht im Wesentlichen dem Aufbau der Spannklammer 300 gemäß Fig. 22 mit verlängerten Schenkeln 344, 346. Entsprechend der Ausführungsform gemäß Fig. 22 weisen die Schenkel 344, 346 ebenfalls Aussparungen 362 zur gezielten Materialschwächung der Schenkel 344, 346 auf, um eine elastische und geringe plastische Verformung bei geringem Kraftaufwand der Schenkel 344, 346 entlang der Biegelinie 364 zu erreichen.

Das Schließblech 354 ist in Fig. 26a) bis 26f) in verschiedenen Ansichten dargestellt. Ausgehend von einer Grundplatte 366 erstrecken sich seitliche Schenkel 368, deren Höhe einen Abstand des Abschnitts 26 des zweiten Profils 14 von dem ersten Profil 12 definieren. Endseitig weisen die Schenkel 368 jeweils einen Anschlag 370 auf, der an einer Unterseite des ersten Profils 12 anliegt bzw. gegen diese abstützbar ist. Die Schenkel 368 bilden zusammen mit der Grundplatte 366 im Wesentlichen eine U-Form.

In Fig. 26a) zeigt eine Draufsicht des Schließblechs 352, wobei in Seitenrändern 372 jeweils Aussparungen zur Bildung der Anschläge 354 eingeformt sind. Des Weiteren ist in der Grundplatte im Wesentlichen zentral eine nach innen gerichtete Auswölbung 374 zur Verstärkung der Grundplatte ausgebildet.

## Patentansprüche

1. Spannvorrichtung (10, 64, 118, 166, 192, 248, 298, 340) zum Verbinden eines ersten Profils (12), wie Vierkantprofil, mit einem quer zu dem ersten Profil (12) verlaufenden zweiten Profil (14), wie T-Profil, umfassend eine Spannklammer (16, 66, 120, 168, 194, 250, 300, 342) mit zwei aufeinanderzu verstellbaren Schenkeln (18, 20; 68, 70; 124, 126; 196, 198; 252, 254; 302, 304; 344, 346) mit jeweils einer Aussparung (28, 30; 76, 78, 200, 202; 256, 258; 348, 350) zur Aufnahme und Fixierung des ersten Profils (12) und jeweils einem Endabschnitt (22, 24; 204, 206; 260, 262; 310, 312; 352) zur Fixierung an einem Abschnitt (26) des zweiten Profils (14) sowie ein Schraubelement (42, 104, 154, 214, 270, 320, 360) zum Aufeinanderzubewegen der Schenkel, wobei
die Spannvorrichtung (10, 64, 118, 166, 192, 248, 298, 340) ein mit den Schenkeln (18, 20; 68, 70; 124, 126; 196, 198; 252, 254; 302, 304; 344, 346) der Spannklammer (16, 66, 120, 168, 194, 250, 300, 342) zusammenwirkendes Schließblech (32, 80, 122, 170; 208, 264, 304, 352) mit Anschlägen (34, 36, 38, 40; 90, 92, 94, 96; 148; 180, 182; 212; 268; 318; 358) aufweist, das Schraubelement (42, 104, 154, 214, 270, 320, 360) von einem die Schenkel verbindenden Abschnitt ausgeht und zum Verstellen der Schenkel relativ zu dem Schließblech gegen das erste Profil (12) abstützbar ist, und wobei von den Schenkeln (18, 20; 68, 70; 124, 126; 196, 198; 252, 254; 302, 304; 344, 346) ausgehende Abschnitte (44, 46, 48, 50; 110, 112, 114, 116; 128, 130, 132, 134) mit den Anschlägen zusammenwirken und beim Verstellen der Spannklammer (16, 66, 120, 168, 194, 250, 300, 342) das Aufeinanderzuschwenken der Schenkel (18, 20; 68, 70; 124, 126; 196, 198; 252, 254; 302, 304; 344, 346) zum formschlüssigen Verbinden der Endabschnitte (22, 24; 204, 206; 260, 262; 310, 312; 352) mit dem Abschnitt (26) des zweiten Profils (14) bewirken, **dadurch gekennzeichnet,**
**dass** die von den Schenkeln (18, 20; 68, 70; 124, 126; 196, 198; 252, 254; 302, 304; 344, 346) ausgehenden Abschnitte (44, 46, 48, 50; 110, 112, 114, 116; 128, 130, 132, 134) vorspringende Abschnitte sind und in Bezug auf den Abschnitt (26) des zweiten Profils (14) außenseitig an den Schenkeln vorgesehen sind und als Abkantungen in Form einer Lasche oder als Prägung (318; 358) in Form einer Materialaufwölbung ausgebildet sind.

2. Spannvorrichtung nach Anspruch 1,
**dadurch gekennzeichnet,**
**dass** das Schraubelement (42, 104, 154, 214, 270, 320, 360) als Gewindestift in einem in dem Abschnitt (43, 106, 150) eingebrachten Gewinde (52, 108, 152) oder einer von dem Abschnitt ausgehenden Mutter aufgenommen ist.

3. Spannvorrichtung nach Anspruch 1 oder 2,
**dadurch gekennzeichnet,**
**dass** das Schraubelement (42, 104, 154, 214, 270, 320, 360) senkrecht zu einer von dem Schließblech (32, 80, 122, 170) aufgespannten Ebene verläuft, wobei ein deckenseitiges Ende des Schraubelements als Werkzeugaufnahme ausgebildet und frei zugänglich ist und ein profilseitiges Ende des Schraubelements gegen das erste Profil (12) abstützbar ist.

4. Spannvorrichtung nach Anspruch 1,
**dadurch gekennzeichnet,**
**dass** die vorspringenden Abschnitte (44, 46, 48, 50; 110, 112, 114, 116; 128, 130, 132, 134) der Schenkel (18, 20; 68, 70; 124, 126; 196, 198; 252, 254; 302, 304; 344, 346) in geschlossenem Zustand stufenlos entlang der Anschläge (34, 36, 38, 40; 90, 92, 94, 96; 148; 180, 182; 212; 268; 318; 358) der Schließklammer bewegbar sind, bis die abgewinkelten Endabschnitte (22, 24; 204, 206; 260, 262; 310, 312; 352) der Schenkel an dem Abschnitt (26) des zweiten Profils (14) zur Anlage gelangen.

5. Spannvorrichtung nach Anspruch 1,
**dadurch gekennzeichnet,**
**dass** die Spannklammer (16, 66, 120, 168, 194, 250, 300, 342) als ein U-förmiges Blechformteil ausgebildet ist.

6. Spannvorrichtung nach Anspruch 1 oder 4,
**dadurch gekennzeichnet,**
**dass** die vorspringenden Abkantungen (44, 46, 48, 50; 110, 112, 114, 116) an einem Innenrand von von dem ersten Profil (12) durchsetzten rechteckförmigen Aussparungen (28, 30; 76, 78) oder an einem Außenrand (140, 142, 144, 146) des jeweiligen Schenkels (124, 126) angeformt sind und/oder dass die vorspringenden Prägungen (318; 358) in seitlichen Randabschnitten des jeweiligen Schenkels (302, 304; 344, 346) ausgebildet sind.

7. Spannvorrichtung nach Anspruch 1 oder 4,
**dadurch gekennzeichnet,**
**dass** die vorspringenden Abkantungen (44, 46, 48, 50; 110, 112, 114, 116; 128, 130, 132, 134) jeweils in einer Ebene verlaufen, die rechtwinklig zu einer von dem Schenkel (18, 20; 68, 70; 124, 126) aufgespannten Ebene verläuft.

8. Spannvorrichtung nach Anspruch 1,
**dadurch gekennzeichnet,**
**dass** zumindest zwei der vorspringenden Abschnitte (44, 46, 48, 50; 110, 112, 114, 116; 128, 130, 132, 134) eines Schenkels knopfförmige Vorsprünge (56, 58, 60, 62) derart zugeordnet sind, dass das Schließblech zwischen einem vorzugswiese rampenförmigen Rand eines der Abschnitte und dem zumindest einen knopfförmigen (56, 58, 60, 62) Abschnitt in vormontiertem Zustand fixiert ist und/oder dass jedem der vorspringenden Abschnitte (44, 46, 48, 50; 110, 112, 114, 116; 128, 130, 132, 134) eines Schenkels knopfformige Vorsprünge (56, 58, 60, 62) zugeordnet sind.

9. Spannvorrichtung nach Anspruch 1,
**dadurch gekennzeichnet,**
**dass** die Schenkel (18, 20; 68, 70; 124, 126; 196, 198; 252, 254; 302, 304; 344, 346) in einem Übergangsbereich zu dem das Schraubelement (42, 104, 154, 214, 270, 320, 360) aufnehmenden Abschnitt (43, 106, 150,217) oder in einem mittleren Bereich entlang einer Biegelinie (220; 324; 364) eine Materialschwächung in Form von Durchbrechungen wie Löchern oder Ausklinkungen (218; 322; 362) aufweisen.

10. Spannvorrichtung nach Anspruch 1,
**dadurch gekennzeichnet,**
**dass** die Schenkel (18, 20; 68, 70; 124, 126; 196, 198; 252, 254; 302, 304; 344, 346) der Spannklammern (16, 66, 120, 168, 194, 250, 300, 342) entlang ihrer Endabschnitte (22, 24; 204, 206; 260, 262; 310, 312; 352) jeweils vorzugsweise längliche, nach außen geprägte Ausformungen (216) zur Versteifung der Schenkel im Endabschnitt aufweisen und/oder dass die Schenkel (18, 20; 68, 70; 124, 126; 196, 198; 252, 254; 302, 304; 344, 346) im mittleren Bereich bereits vor Montage in einem Winkel α nach außen vorgebogen sind.

11. Spannvorrichtung nach Anspruch 1,
**dadurch gekennzeichnet,**
**dass** das Schließblech (32; 80; 208; 264; 314; 352) zwei randseitig gegenüberliegende Aussparungen aufweist, wobei einander gegenüberliegende Randabschnitte (34, 36; 38, 40; 90, 92; 94, 96) jeder Aussparung jeweils einen der Anschläge für die von dem Schenkel vorspringenden Abschnitte bilden.

12. Spannvorrichtung nach Anspruch 11,
**dadurch gekennzeichnet,**
**dass** die Randabschnitte (34, 36; 38, 40; 90, 92; 94, 96) jeweils einen Abstand zueinander aufweisen, der einem Abstand der Schenkel (18, 20) in vormontiertem Zustand entspricht.

13. Spannvorrichtung nach Anspruch 1,
**dadurch gekennzeichnet,**
**dass** das Schließblech (80, 170) U-förmig ausgebildet ist und Schenkel (84, 86; 172, 174) aufweist, wobei Endabschnitt des Schenkels jeweils eine erste Abstützung (98, 100; 186, 188) und eine Unterseite des die Schenkel verbindenden Abschnitts eine zweite Abstützung (102; 190) bildet.

14. Spannvorrichtung nach Anspruch 1,
**dadurch gekennzeichnet,**
**dass** das Schließblech (208; 264) Schenkel (230, 232, 234, 236; 286, 288, 290, 292) aufweist, die im Wesentlichen rechtwinklig von gegenüberliegenden Querrändern einer Grundplatte (220, 272) abgebogen sind und sich im montierten Zustand parallel oder im Wesentlichen parallel zu Seitenflächen des ersten Profils (12) erstrecken, wobei Innenflächen (238) der Schenkel an den Seitenflächen des Profils anliegen und/oder dass das Schließblech (208, 264) von Längsrändern (226, 228) der Grundplatte (220, 272) abgewinkelte Schenkel (244, 246; 294, 296) aufweist, die sich im Wesentlichen rechtwinklig von Längsrändern (226, 228) erstrecken und im montierten Zustand parallel oder im Wesentlichen parallel zu Seitenflächen des ersten Profils (12) verlaufen.

15. Spannvorrichtung nach Anspruch 1,
**dadurch gekennzeichnet,**
**dass** das Schließblech (314) ausgehend von einer Grundplatte (328) entlang einer Längsachse (334) im Winkel von vorzugsweise ca. 45° verlaufende abgekantete Laschen (338) aufweist, welche eine prismatische Zentrierung für die Schenkel (302, 304) der Spannklammer (300) bilden.

## Claims

1. A clamping device (10, 64, 118, 166, 192, 248, 298, 340) for connecting a first profile (12) such as a square profile to a second profile (14) such as a T profile that runs transversely to the first profile (12), comprising
a clamp (16, 66, 120, 168, 194, 250, 300, 342) with two shanks (18, 20; 68, 70; 124, 126; 196, 198; 252, 254; 302, 304; 344, 346) that can be adjusted to one another and have a recess (28, 30; 76, 78, 200, 202; 256, 258; 48, 350) for receiving and fixing the first profile (12) and with an end section (22, 24; 204, 206; 260, 262; 310, 312; 352) for being fixed to a section (26) of the second profile (14), and comprising a screw element (42, 104, 154, 214, 270, 320, 360) for moving the shanks toward one another,
wherein
the clamping device (10, 64, 118, 166, 192, 248, 298, 340) comprises a closing sheet (32, 80, 122, 170; 208, 264, 304, 352) with stops (34, 36, 38, 40; 90, 92, 94, 96; 148; 180, 182; 212; 268; 318; 358), which closing sheet cooperates with the shanks (18, 20; 68, 70; 124, 126; 196, 198; 252, 254; 302, 304; 344, 346) of the clamps (16, 66, 120, 168, 194, 250, 300, 342), the screw element (42, 104, 154, 214, 270, 320, 360) starts from a section connecting the shanks and can be supported against the first profile (12) for adjusting the shanks relative to the closing sheet, and whereby sections (44, 46, 48, 50; 110, 112, 114, 116; 128, 130, 132, 134) starting from the shanks (18, 20; 68, 70; 124, 126; 196, 198; 252, 254; 302, 304; 344, 346) cooperate with the stops and during the adjusting of the clamps (16, 66, 120, 168, 194, 250, 300, 342) the pivoting of the shanks (18, 20; 68, 70; 124, 126; 196, 198; 252, 254; 302, 304; 344, 346) onto one another brings about the positive connection of the end sections (22, 24; 204, 260, 262; 206; 310, 312; 352) to the section (26) of the second profile (14), **characterized in that**
the sections (44, 46, 48, 50; 110, 112, 114, 116; 128, 130, 132, 134) starting from the shanks (18, 20; 68, 70; 124, 126; 196, 198; 252, 254; 302, 304; 344, 346) are projecting sections and are außenseitig an den shanks vorgesehen with respect to the section (26) of of the second profile (14) and are formed as edges in the form of a flap or as stamping/as an impression (318; 358) in the form of a material curvature.

2. The clamping device according to claim 1,
**characterized in that**
the screw element (42, 104, 154, 214, 270, 320, 360) is received as a threaded pin in a threading (52, 108, 152) introduced into the section (43, 106, 150) or is received in a nut starting from the section.

3. The clamping device according to claim 1 or claim 2,
**characterized in that**
the screw element (42, 104, 154, 214, 270, 320, 360) runs vertically to a plane stretching from the closing sheet (32, 80, 122, 170), wherein a ceiling-side end is formed as a tool receptacle and is freely accessible and a profile-side end of the screw element can be supported against the first profile (12).

4. The clamping device according to claim 1,
**characterized in that**
the projecting sections (44, 46, 48, 50; 110, 112, 114, 116; 128, 130, 132, 134) of the shanks (18, 20; 68, 70; 124, 126; 196, 198; 252, 254; 302, 304; 344, 346) can move continuously in the closed state along the stops (34, 36, 38, 40; 90, 92, 94, 96; 148; 180, 182; 212; 268; 318; 358) of the closing clamp until the bent end sections (22, 24; 204, 206; 260, 262; 310, 312; 352) of the shanks come to rest on the section (26) of the second profile (14).

5. The clamping device according to claim 1,
**characterized in that**
the clamp (16, 66, 120, 168, 194, 250, 300, 342) is constructed as a U-shaped mold sheet part.

6. The clamping device according to claim 1 or claim 4,
**characterized in that**
the projecting edges (44, 46, 48, 50; 110, 112, 114, 116) are formed on an inner edge of the rectangular recesses (28; 30; 76, 78) interspersed by the first profile (12) or on an outer edge (140, 142, 144, 146) of the particular shank (124, 126) and/or that the projecting stampings (318; 358) are formed in lateral edge sections of the particular shank (302, 304; 344, 346).

7. The clamping device according to claim 1 or claim 4,
**characterized in that**
the projecting edges (44, 46, 48, 50; 110, 112, 114, 116; 128, 130, 132, 134) each run in a plane that runs at a right angle to a plane stretching from the shank (18, 20; 68, 70; 124, 126).

8. The clamping device according to claim 1,
**characterized in that**
at least two of the projecting sections (44, 46, 48, 50; 110, 112, 114, 116; 128, 130, 132, 134) of a shank are associated with stud-like projections (56, 58, 60, 62) in such a manner that the closing sheet is fixed between a preferably ramp-shaped edge of one of the sections and the at least one stud-shaped (56, 58, 60, 62) projection in the pre-assembled state and/or that each of the projecting sections (44, 46, 48, 50; 110, 112, 114, 116; 128, 130, 132, 134) of a shank is associated with stud-like projections (56, 58, 60, 62).

9. The clamping device according to claim 1,
**characterized in that**
the shanks (18, 20; 68, 70; 124, 126; 196, 198; 252, 254; 302, 304; 344, 346) have a material weakening in the form of perforations such as holes or notches (218; 322;362) in a transitional area to the section (43, 106, 150, 217) receiving the screw element (42, 104, 154, 214, 270, 320, 360) or in a central area along a bending line (220; 324; 364).

10. The clamping device according to claim 1,
**characterized in that**
the shanks (18, 20; 68, 70; 124, 126; 196, 198; 252, 254; 302, 304; 344, 346) of the clamps (16, 66, 120, 168, 194, 250, 300, 342) have each preferably oblong, outwardly shaped formations (216) along their end sections for stiffening the shanks (22, 24; 204, 206; 260, 262; 310, 312; 352) in the end sections and/or that the shanks (18, 20; 68, 70; 124, 126; 196, 198; 252, 254; 302, 304; 344, 346) are bent outward at an angle α in the central area before the assembly already.

11. The clamping device according to claim 1,
**characterized in that**
the closing sheet (32; 80; 208; 264; 314; 352) comprises two opposing recesses on the edge side, wherein edge sections (34, 36; 38, 40; 90, 92; 94, 96) of each recess, which edge sections oppose each other, each form one of the stops for the sections projecting from the shank.

12. The clamping device according to claim 11,
**characterized in that**
the edge sections (34, 36; 38, 40; 90, 92; 94, 96) each have an interval from each other that corresponds to an interval of the shanks (18, 20) in the pre-assembled state.

13. The clamping device according to claim 1,
**characterized in that**
the closing sheet (80, 170) is U-shaped and comprises shanks (84, 86; 172, 174), wherein the end section of the shank each forms a first support (98, 100; 186, 188) and a bottom of the section connecting the shanks forms a second support (102; 190).

14. The clamping device according to claim 1,
**characterized in that**
the closing sheet (208; 264) comprises shanks (230, 232, 234, 236; 286, 288, 290, 292) that are bent substantially at a right angle from opposing transverse edges of a base plate (220, 272) and extend in the mounted state parallel to or substantially parallel to side surfaces of the first profile (12), wherein inner surfaces (238) of the shanks rest on the side surfaces of the profile and/or that the closing sheet (208, 264) comprises shanks (244, 246; 294, 296) bent from longitudinal edges (226, 228) of the base plate (220, 272), which shanks extend substantially at a right angle from longitudinal edges (226, 228) and run in the assembled state parallel to or substantially parallel to side surfaces of the first profile (12).

15. The clamping device according to claim 1,
**characterized in that**
the closing sheet (314) comprises bent flaps (338) starting from a base plate (328) and running along a longitudinal axis (334) at an angle of preferably about 45°, which flaps form a prismatic centering for the shanks (302, 304) of the clamp (300).

## Revendications

1. Dispositif de serrage (10, 64, 118, 166, 192, 248, 298, 340) pour relier un premier profilé (12), tel un profilé carré, à un second profilé (14), tel un profilé en T, s'étendant transversalement par rapport au premier profil (12), comprenant une pince de serrage (16, 66, 120, 168, 194, 250, 300, 342) avec deux branches (18, 20 ; 68, 70 ; 124, 126 ; 196, 198 ; 252, 254 ; 302, 304 ; 344, 346) réglables l'une par rapport à l'autre avec respectivement un évidement (28, 30 ; 76, 78 ; 200, 202 ; 256, 258 ; 348, 350) pour la réception et la fixation du premier profilé (12) et respectivement une extrémité (22, 24 ; 204, 206 ; 260, 262 ; 310, 312 ; 352) pour la fixation du second profilé (14) sur une section (26) ainsi qu'un élément de vissage (42, 104, 154, 214, 270, 320, 360) permettant le déplacement des branches les unes par rapport aux autres, sachant que
le dispositif de serrage (10, 64, 118, 166, 192, 248, 298, 340) comprend une tôle de fermeture (32, 80, 122, 170 ; 208, 264, 304, 352) avec des butées (34, 36, 38, 40; 90, 92, 94, 96 ; 148 ; 180, 182 ; 212, 268 ; 318 ; 358), ladite tôle étant en interaction avec les branches (18, 20 ; 68, 70 ; 124, 126 ; 196, 198 ; 252, 254 ; 302, 304; 344, 346) des pinces de serrage (16, 66, 120, 168, 194, 250, 300, 342), l'élément de vissage (42, 104, 154, 214, 270, 320, 360) sort d'une section reliant la branche et peut prendre appui contre le premier profilé (12) pour ajuster la branche par rapport à la tôle de fermeture, et sachant que les sections (44, 46, 48, 50 ; 110, 112, 114, 116 ; 128, 130, 132, 134) partant des branches (18, 20 ; 68, 70 ; 124, 126 ; 196, 198 ; 252, 254 ; 302, 304 ; 344, 346) sont en interaction avec les butées et que, lors du réglage des pinces de serrage (16, 66, 120, 168, 194, 250, 300, 342), lesdites sections induisent le pivotement des branches (18, 20 ; 68, 70 ; 124, 126 ; 196, 198 ; 252, 254 ; 302, 304 ; 344, 346) les unes vers les autres pour un assemblage à engagement positif des extrémités (22, 24 ; 204, 206 ; 260, 262 ; 310, 312 ; 352) avec la section (26) du second profilé (14),
**caractérisé en ce**
**que** les sections (44, 46, 48, 50 ; 110, 112, 114, 116 ; 128, 130, 132, 134) partant des branches (18, 20 ; 68, 70 ; 124, 126 ; 196, 198 ; 252, 254 ; 302, 304 ; 344, 346) sont des sections en saillie et, par rapport à la section (26) du second profilé (14), ces dernières sont prévues à l'extérieur des branches et constituent des rebords sous forme d'une patte ou une pièce estampée (318 ; 358) sous forme d'un matériau bombé.

2. Dispositif de serrage selon la revendication 1,
**caractérisé en ce**
**que** l'élément de vissage (42, 104, 154, 214, 270, 320, 360), sous forme de tige filetée, est logé dans un filetage (52, 108, 152) placé dans la section (43, 106, 150) ou dans un écrou sortant de la section.

3. Dispositif de serrage selon la revendication 1 ou 2,
**caractérisé en ce**
**que** l'élément de vissage (42, 104, 154, 214, 270, 320, 360) s'étend verticalement par rapport à un plan défini par la tôle de fermeture (32, 80, 122, 170), sachant que sur le côté supérieur, une extrémité de l'élément de vissage est conçue sous forme de logement d'outil et est librement accessible et que, côté profilé, une extrémité de l'élément de vissage peut prendre appui contre le premier profilé (12).

4. Dispositif de serrage selon la revendication 1,
**caractérisé en ce**
**que**, lorsqu'elles sont fermées, les sections en saillie (44, 46, 48, 50 ; 110, 112, 114, 116; 128, 130, 132, 134) des branches (18, 20; 68, 70; 124, 126; 196, 198 ; 252, 254 ; 302, 304 ; 344, 346) peuvent être déplacées en continu le long des butées (34, 36, 38, 40 ; 90, 92, 94, 96 ; 148 ; 180, 182 ; 212; 268 ; 318 ; 358) de la pince de fermeture jusqu'à ce que les extrémités coudées (22, 24 ; 204, 206 ; 260, 262 ; 310, 312 ; 352) de la branche viennent prendre appui sur la section (26) du second profilé (14).

5. Dispositif de serrage selon la revendication 1,
**caractérisé en ce**
**que** la pince de serrage (16, 66, 120, 168, 194, 250, 300, 342) est une pièce en tôle en forme de U.

6. Dispositif de serrage selon la revendication 1 ou 4,
**caractérisé en ce**
**que** les rebords en saillie (44, 46, 48, 50 ; 110, 112, 114, 116) sont formés sur un bord intérieur des évidements rectangulaires (28, 30 ; 76, 78) traversés par le premier profilé (12) ou sur un bord extérieur (140, 142, 144, 146) de la branche respective (124, 126) et/ou que les pièces estampées en saillie (318 ; 358) sont formées dans les sections marginales latérales de la branche respective (302, 304 ; 344, 346).

7. Dispositif de serrage selon la revendication 1 ou 4,
**caractérisé en ce**
**que** les rebords en saillie (44, 46, 48, 50 ; 110, 112, 114, 116 ; 128, 130, 132, 134) s'étendent respectivement dans un plan qui se situe perpendiculairement à un plan défini par la branche (18, 20 ; 68, 70 ; 124, 126).

8. Dispositif de serrage selon la revendication 1,
**caractérisé en ce**
**que** des épaulements en forme de bouton (56, 58, 60, 62) sont associés à au moins deux des sections en saillie (44, 46, 48, 50 ; 110, 112, 114, 116 ; 128, 130, 132, 134) d'une branche de sorte que, lorsqu'elle est pré-montée, la tôle de fermeture est fixée entre un bord, de préférence en forme de rampe, d'une des sections et celui d'au moins une section en forme de bouton (56, 58, 60, 62) et/ou que des épaulements en forme de bouton (56, 58, 60, 62) sont associés à chacune des sections en saillie (44, 46, 48, 50 ; 110, 112, 114, 116 ; 128, 130, 132, 134) d'une branche.

9. Dispositif de serrage selon la revendication 1,
**caractérisé en ce**
**que**, dans une zone de transition de la section (43, 106, 150, 217) réceptionnant l'élément de vissage (42, 104, 154, 214, 270, 320, 360) ou dans une zone intermédiaire le long d'une ligne de flexion (220 ; 324 ; 364), les branches (18, 20 ; 68, 70 ; 124, 126 ; 196, 198 ; 252, 254 ; 302, 304 ; 344, 346) présentent un affaiblissement du matériau sous forme de perçages tels que des trous ou des encoches (218 ; 322 ; 362).

10. Dispositif de serrage selon la revendication 1,
**caractérisé en ce**
**que** chacune des branches (18, 20 ; 68, 70 ; 124, 126 ; 196, 198 ; 252, 254 ; 302, 304 ; 344, 346) des pinces de serrage (16, 66, 120, 168, 194, 250, 300, 342) le long de leurs extrémités (22, 24 ; 204, 206 ; 260, 262 ; 310, 312 ; 352) présentent des protubérances (216) de préférence longiformes estampées vers l'extérieur pour renforcer l'extrémité des branches et/ou que les branches (18, 20 ; 68, 70 ; 124, 126 ; 196, 198 ; 252, 254 ; 302, 304 ; 344, 346) ont déjà été courbées vers l'extérieur selon un angle α dans leur région centrale avant le montage.

11. Dispositif de serrage selon la revendication 1,
**caractérisé en ce**
**que** la tôle de fermeture (32; 80; 208; 264; 314; 352) comprend deux évidements opposés par le bord, sachant que les sections marginales opposées (34, 36 ; 38, 40 ; 90, 92 ; 94, 96) de chaque évidement forment respectivement l'une des butées pour les sections en saillie sur la branche.

12. Dispositif de serrage selon la revendication 11,
**caractérisé en ce**
**que** les sections marginales (34, 36 ; 38, 40 ; 90, 92 ; 94, 96) présentent respectivement un écartement entre elles qui correspond à un écartement des branches (18, 20) à l'état pré-montée.

13. Dispositif de serrage selon la revendication 1,
**caractérisé en ce**
**que** la tôle de fermeture (80, 170) est en forme de U et comprend des branches (84, 86 ; 172, 174), sachant qu'une extrémité de la branche forme respectivement un premier appui (98, 100 ; 186, 188) et que la face inférieure de la section reliant les branches forme un second appui (102 ; 190).

14. Dispositif de serrage selon la revendication 1,
**caractérisé en ce**
**que** la tôle de fermeture (208 ; 264) comprend des branches (230, 232, 234, 236 ; 286, 288, 290, 292) qui sont courbées sensiblement perpendiculaires depuis les bords transversaux opposés d'une plaque de base (220, 272) et, lorsqu'elles sont montées, s'étendent parallèlement ou sensiblement parallèlement aux surfaces latérales du premier profilé (12), sachant que les surfaces intérieures (238) des branches sont en appui sur les surfaces latérales du profilé et/ou que partant des bords longitudinaux (226, 228) de la plaque de base (220, 272), la tôle de fermeture (208, 264) présente des branches courbées (244, 246 ; 294, 296) qui s'étendent sensiblement perpendiculaires depuis les bords longitudinaux (226, 228) et qui, lorsqu'elles sont montées, sont parallèles ou sensiblement parallèles aux surfaces latérales du premier profilé (12).

15. Dispositif de serrage selon la revendication 1,
**caractérisé en ce**
**que** la tôle de fermeture (314) s'étendant d'une plaque de base (328) le long d'un axe longitudinal (334) présente des pattes (338) repliées dans un angle de préférence d'env. 45°, lesquelles forment un centrage prismatique pour les branches (302, 304) de la pince de serrage (300).
